# EUROPÄISCHE PATENTSCHRIFT

(11) **EP 3 095 656 B1**
(45) Veröffentlichungstag und Bekanntmachung des Hinweises auf die Patenterteilung: **05.06.2019**
(21) Anmeldenummer: 16000919.7
(22) Anmeldetag: 22.04.2016
(51) Int. Cl.: B60W 10/08, B60W 20/40

(54) **VERFAHREN ZUR AUSWAHL EINER BETRIEBSART EINES HYBRIDFAHRZEUGS**
METHOD FOR SELECTING AN OPERATING MODE OF A HYBRID VEHICLE
PROCEDE DE SELECTION D'UN MODE DE FONCTIONNEMENT D'UN VEHICULE AUTOMOBILE HYBRIDE

(30) Priorität: 22.05.2015 DE 102015006820
(43) Veröffentlichungstag der Anmeldung: 23.11.2016
(73) Patentinhaber: MAN Truck & Bus AG, 80995 München (DE)
(72) Erfinder: Nuber, Johannes, 85757 Karlsfeld (DE); Kirchensteiner, Elmar, 85256 Vierkirchen (DE); Günnewicht, Manuel, 85652 Pliening (DE); Hierlmeier, Matthias, 80997 München (DE); Ovari, Sebastian, 85241 Hebertshausen (DE)
(74) Vertreter: v. Bezold & Partner Patentanwälte - PartG mbB

(56) Entgegenhaltungen:
- DE-A1-102007 019 989
- FR-A1- 3 001 427
- US-A1- 2011 130 901
- US-A1- 2015 051 775

## Beschreibung

Die Erfindung betrifft ein Verfahren zur Auswahl einer Betriebsart eines Hybridfahrzeugs, insbesondere ein Verfahren, bei dem aus einer gegebenen Menge möglicher Betriebsarten eines hybridisierten Antriebsstrangs eine für den aktuellen Betriebszeitpunkt hinsichtlich vorgegebener Zielkriterien optimale Betriebsart mit einer korrespondierenden optimalen Leistungsverteilung im Antriebsstrang ausgewählt wird.

Stetig steigende Kraftstoffkosten sowie strengere gesetzliche Vorgaben betreffend die Fahrzeugemissionen stellen immer höhere Anforderungen an die Effizienz von Kraftfahrzeugen. Ein großes Potential zur Reduzierung des Kraftstoffverbrauchs stellt die Hybridisierung des Antriebsstrangs dar. Dabei wird der Antriebsstrang um mindestens eine elektrische Maschine und ein zugeordnetes elektrisches Speichersystem erweitert.

Je nach Ausführung der Hybridisierung können damit neben einem rein verbrennungsmotorischen Betrieb verschiedene weitere Betriebsarten, wie elektrisches Fahren, ein Boost-Betrieb, eine Bremsrekuperation etc. dargestellt werden. Die verschiedenen Betriebsarten eines hybridisierten Antriebsstrangs müssen im Fahrzeugbetrieb sinnvoll eingesetzt werden, um eine größtmögliche Reduzierung des Kraftstoffverbrauchs zu erreichen. Dabei sollen auch weitere Ziele beachtet werden, da die Steigerung der Verbrauchseffizienz stets im Spannungsfeld zwischen Emissionsminimierung, Komponentenschutz und/oder Fahrkomfort stattfindet. Zur Realisierung einer optimalen Betriebsstrategie des Hybridfahrzeugs ist es daher erforderlich, aus einer vorgegebenen Menge möglicher Betriebsarten des hybridisierten Antriebsstrangs eine für den aktuellen Betriebszeitpunkt hinsichtlich der vorgegebenen Zielkriterien optimale Betriebsart mit einer korrespondierenden optimalen Leistungsverteilung im Antriebsstrang auszuwählen.

Zur Auswahl einer jeweils optimalen Betriebsart im Rahmen einer Betriebsstrategie sind aus dem Stand der Technik verschiedene Techniken und Methoden bekannt. Beispielhaft wird hierzu auf die folgenden Veröffentlichungen aus dem Stand der Technik verwiesen:
[1]: A. Wilde, Eine modulare Funktionsarchitektur für adaptives und vorausschauendes Energiemanagement in Hybridfahrzeugen, Dissertation, TU München, 2009; und
[2]: J. von Grundherr, Ableitung einer heuristischen Betriebsstrategie für ein Hybridfahrzeug aus einer Online-Optimierung, Dissertation, TU München, 2010; und
[3]: Onori et al., Adaptive Equivalent Consumption Minimization Strategy for Hybrid Electric Vehicles, Proceedings of the ASME 2010, Dynamic Systems and Control Conference DSCC2010 September 12-15, 2010, Cambridge (MA), USA.

Gemäß der Veröffentlichung [1], S. 19 ff. können die verschiedenen Techniken und Methoden zur Festlegung einer Betriebsstrategie für einen hybridisierten Antriebsstrang wie folgt klassifiziert werden:
Gemäß sogenannten Offline- oder statischen Betriebsstrategien werden alle Nutzungsfälle des Fahrzeugs bereits vorab und offline anhand fester Vorgaben, nach denen der Energiehaushalt im Fahrzeug eingestellt wird, festgelegt. Derartige Vorgaben bzw. Regeln können beispielsweise mit Zustandsautomaten oder kontinuierlichen Reglern umgesetzt werden.

Ferner sind Optimalsteuerungen bekannt, die einen Prädiktionshorizont in das Optimierungsproblem miteinbeziehen (auch modellbasierte prädiktive Regelung (MPR) genannt). Derartige Ansätze ermitteln, basierend auf ihren Eingangsinformationen, in einem gewissen Vorausschaufenster (Prädiktionshorizont) in einem vorgegebenen Suchraum für das betrachtete Modell eine optimale Trajektorie einer Zustandsgröße des Systems, beispielsweise des Ladezustands des Energiespeichers.

Ferner sind KI-Methoden-basierte Betriebsstrategien zur Regelung der Energiesysteme im Hybridfahrzeug bekannt. Hierbei wird versucht, unscharfes Wissen mit Hilfe mathematischer Verfahren, beispielsweise neuronaler Netze, Fuzzy Logic, ökonomischer Modelle oder Ansätzen der Spieltheorie, derart darzustellen, dass Rechnersysteme das unscharfe Wissen verarbeiten können.

Schließlich sind Methoden basierend auf sogenannten Online-Optimierungen bekannt, die das Fahrzeug als ein mehrdimensionales Optimierungsproblem verstehen, das durch eine Zielfunktion beschrieben wird, welche nicht nur physikalische Größen wie den Verbrauch, sondern auch andere Anforderungen wie die Lärmemission oder den Lebensdauerschutz von Komponenten etc. miteinbeziehen. So wird beispielsweise in der Veröffentlichung [2] eine Gesamtkostenfunktion vorgeschlagen, mittels der neben dem Zielkriterium "Kraftstoffeffizienz" weitere Zielkriterien wie beispielsweise eine Fahrbarkeit (Fahrkomfort) berücksichtigt werden. Hierbei werden Teilkostenfunktionen korrespondierend zu den einzelnen Zielkriterien zu einer Gesamtkostenfunktion mittels einer Summierung kombiniert und dann die Entscheidung betreffend die Betriebsstrategie aus der Gesamtkostenfunktion berechnet.

Die US 2015/0051775 A1 und die US 2011/0130901 A1 offenbaren Verfahren zur Auswahl einer Betriebsart eines Hybridfahrzeugs, bei dem aus einer vorgegebenen Menge möglicher Betriebsarten eines hybridisierten Antriebsstrangs eine für den aktuellen Betriebszeitpunkt hinsichtlich vorgegebener Zielkriterien optimale Betriebsart mit einer korrespondierenden optimalen Leistungsverteilung im Antriebsstrang ausgewählt wird.

Nachteilig an den bekannten Ansätzen ist jedoch, dass die Optimierungsansätze basierend auf einer derartigen kombinierten Gesamtkostenfunktion hohe Rechenaufwände erfordern und im Hinblick auf die Grenzen der Rechenkapazität aktueller Steuergeräte oftmals nicht für den Echtzeitbetrieb geeignet sind. Ferner haben diese Ansätze den Nachteil, dass die Optimierungsverfahren in der Regel nicht mit geringem Anpassungsaufwand an weitere oder veränderte Zielkriterien angepasst werden können, da Wechselwirkungen zwischen den einzelnen Zielkriterien bestehen und ein Hinzufügen weiterer Teilkostenfunktionen in der Regel komplexe Änderungen an der analytischen Formel der Gesamtkostenfunktion bedingt.

Es ist somit eine Aufgabe der Erfindung, ein verbessertes Verfahren zur Auswahl einer Betriebsart eines Hybridfahrzeugs bereitzustellen, mit dem Nachteile herkömmlicher Techniken vermieden werden können. Die Aufgabe der Erfindung ist es insbesondere, ein Verfahren zur Auswahl einer Betriebsart eines Hybridfahrzeugs bereitzustellen, bei dem aus einer vorgegebenen Menge möglicher Betriebsarten eines hybridisierten Antriebsstrangs eine für den aktuellen Betriebszeitpunkt hinsichtlich vorgegebener Zielkriterien optimale Betriebsart ausgewählt werden kann und mit dem das Risiko fehlerhafter Entscheidungen minimiert und mit dem gleichzeitig Rechenzeit eingespart werden kann. Ferner soll ein Verfahren bereitgestellt werden, das einfach und intuitiv auf zusätzliche Zielkriterien erweiterbar ist.

Diese Aufgaben werden durch ein Verfahren mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird ein Verfahren zur Auswahl einer Betriebsart eines Hybridfahrzeugs vorgeschlagen, bei dem in einem mehrstufigen Prozess aus der Menge der möglichen Betriebsarten des Fahrzeugs bzw. des Antriebsstrangs eine bezüglich vorgegebener Optimierungskriterien optimale Betriebsart zusammen mit einer optimalen Leistungsverteilung im Antriebsstrang ausgewählt wird. Die Optimierungskriterien werden nachfolgend auch als Zielkriterien bezeichnet. Hierbei wird die Entscheidung der Bestimmung einer optimalen Leistungsverteilung im Antriebsstrang von der Entscheidung bzw. Auswahl einer optimalen Betriebsart entkoppelt, d. h., es wird zuerst die optimale Leistungsverteilung für jede mögliche Betriebsart bestimmt und anschließend auf Basis dieses Berechnungsergebnisses die hinsichtlich der Zielkriterien optimale Betriebsart ausgewählt.

Gemäß diesen allgemeinen Gesichtspunkten der Erfindung wird somit ein Verfahren zur Auswahl der Betriebsart eines Hybridfahrzeugs bereitgestellt, bei dem aus einer vorgegebenen Menge möglicher Betriebsarten eines hybridisierten Antriebsstrangs eine für den aktuellen Betriebszeitpunkt hinsichtlich vorgegebener Zielkriterien optimale Betriebsart mit einer korrespondierenden optimalen Leistungsverteilung im Antriebsstrang ausgewählt wird. Für jedes der vorgegebenen Zielkriterien wird vorab wenigstens eine Bewertungsvariable zur quantitativen Beschreibung des jeweiligen Zielkriteriums festgelegt bzw. bestimmt. Unter dem Begriff "vorab" wird eine Festlegung der Bewertungsvariablen verstanden, die "Offline", d. h. nicht im Fahrbetrieb des Fahrzeugs, stattfindet, sondern bereits vor oder bei der programmtechnischen Einrichtung der Fahrzeugsteuerung, die zum Ausführen des Online-Verfahrens ausgebildet ist.

Zur Online-Berechnung der optimalen Betriebsartenauswahl umfasst das Verfahren ferner die folgenden Schritte:
Für jede Betriebsart einer ersten Auswahl möglicher Betriebsarten werden die möglichen Leistungsverteilungen im Antriebsstrang sowie die Werte der die Zielkriterien quantitativ beschreibenden Bewertungsvariablen bestimmt, wobei die Werte der Bewertungsvariablen für jede der bestimmten Leistungsverteilungen der jeweiligen Betriebsart berechnet werden, zumindest falls deren Werte abhängig von der Leistungsverteilung sind. Jedem Betriebspunkt einer möglichen Leistungsverteilung einer Betriebsart ist somit jeweils ein Wert jeder der Bewertungsvariablen zugeordnet. Das Zielkriterium einer Maximierung der Energieeffizienz kann beispielsweise durch eine Bewertungsvariable quantitativ beschrieben werden, die den Wirkungsgrad der elektrischen Traktionsmaschine angibt. Der Wirkungsgrad wird dann jeweils in jeder Betriebsart für jede der bestimmten Leistungsverteilungen bestimmt.

Anschließend wird für jede Betriebsart der ersten Auswahl von Betriebsarten eine optimale Leistungsverteilung im Antriebsstrang mittels der bestimmten Werte der Bewertungsvariablen bestimmt.

Anschließend erfolgt eine Auswahl einer optimalen Betriebsart mittels derjenigen Werte der Bewertungsvariablen, die diese für die Betriebsarten der ersten Auswahl jeweils im Betriebspunkt der bestimmten optimalen Leistungsverteilung aufweisen. Als vorzugebende Leistungsverteilung für die ausgewählte optimale Betriebsart wird vorzugsweise die entsprechende zuvor bestimmte optimale Leistungsverteilung für diese Betriebsart eingestellt.

Mit anderen Worten wird somit für jede Betriebsart unabhängig von der anderen bestimmt, welches die aktuell optimale Leistungsverteilung im Antriebsstrang wäre. Ein Vorteil hiervon ist, dass dadurch Quereinflüsse von anderen Betriebsarten bei der Bestimmung der für eine Betriebsart optimalen Leistungsverteilung vermieden werden. Erst in einem nachfolgenden Schritt werden dann die einzelnen Betriebsarten untereinander mittels der Bewertungsvariablen verglichen, wobei hierfür nur noch diejenigen Werte der Bewertungsvariablen verwendet werden, die diese in den Betriebspunkten der zuvor bestimmten optimalen Leistungsverteilungen aufweisen.

Unter dem Begriff einer Betriebsart eines hybridisierten Antriebsstranges wird in diesem Dokument eine Kombination aus einer spezifischen Antriebsstrangkonfiguration und der Form der Energieflüsse in den beteiligten Komponenten verstanden. Die möglichen Betriebsarten des Antriebsstrangs können zumindest zwei der folgenden, an sich bekannten Betriebsarten umfassen: ein rein verbrennungsmotorisches Fahren; ein rein elektrisches Fahren bei ausgeschaltetem Verbrennungsmotor; ein elektrisches Fahren mit Verbrennungsmotor im Leerlaufbetrieb; ein Boost-Betrieb, bei dem die Summenantriebsleistung über der Leistung liegt, die aktuell allein durch den Verbrennungsmotor bereitgestellt werden kann, und wobei die zusätzliche Leistung durch die elektrische Traktionsmaschine, gespeist vom elektrischen Traktionsenergiespeicher, bereitgestellt wird; ein Segelbetrieb, d. h. ein Rollbetrieb, bei dem der Verbrennungsmotor und/oder die generatorisch arbeitende elektrische Maschine nicht von der kinetischen Energie des Fahrzeugs geschleppt werden; eine Bremsrekuperation; ein elektrisches Anfahren; eine Lastpunktanhebung; einer Lastpunktabsenkung; und ein sogenannter GenSet-Betrieb, bei dem die vom Verbrennungsmotor abgegebene Leistung von der elektrischen Maschine in elektrische Leistung gewandelt wird, zur Versorgung der Nebenaggregate und/oder zum Aufladen des elektrischen Energiespeichers, ohne dass ein Moment auf die Antriebsräder gestellt wird.

Eine Leistungsverteilung gibt die Aufteilung der Gesamtleistung des Antriebsstrangs auf die einzelnen Komponenten des Antriebsaggregats im hybridisierten Antriebsstrang im Hinblick auf eine vom Fahrer aktuell angeforderte Leistung (z. B. in Form eines positiven oder negativen Fahrerwunschmoments) an. Gemäß einer hervorgehobenen Ausführungsform der Erfindung ist das Hybridfahrzeug ein Parallel-Hybridfahrzeug mit einem Verbrennungsmotor und einer elektrischen Traktionsmaschine, die voneinander unabhängig betreibbar sind, aber auf einer gemeinsamen Welle sitzen, so dass sie im gekoppelten Fall immer mit derselben Drehzahl bewegt werden und sich ihre Momente addieren. In diesem Fall entspricht der Leistungsverteilung im Antriebsstrang die Verteilung des Fahrerwunschmoments auf das Drehmoment (Moment) des Verbrennungsmotors und das Drehmoment (Moment) der elektrischen Maschine. Bei gegebenem Fahrerwunschmoment können somit die möglichen Leistungsverteilungen im Antriebsstrang für jede Betriebsart durch die von der elektrischen Traktionsmaschine erzeugbaren Momente in dieser Betriebsart angegeben werden, die durch die Leistungsfähigkeit der elektrischen Maschine begrenzt sind. Dementsprechend kann die optimale Leistungsverteilung je Betriebsart für ein Parallel-Hybridfahrzeug durch ein hinsichtlich der vorgegebenen Zielkriterien optimales Moment der elektrischen Traktionsmaschine angeben werden. Es wird jedoch betont, dass das Verfahren nicht auf Parallel-Hybridfahrzeuge beschränkt ist.

Unter der optimalen Auswahl einer Betriebsart wird die Auswahl derjenigen Betriebsart verstanden, die hinsichtlich der mehreren vorgegebenen Zielkriterien den bestmöglichen Kompromiss bietet.

Neben der vorstehend genannten Maximierung der Energieeffizienz als Zielkriterium für die Auswahl der optimalen Betriebsart können weitere Zielkriterien vorgegeben werden, wie beispielsweise die Konditionierung des Energiespeichers, eine Kraftstoffverbrauchsminimierung und/oder ein möglichst hoher Fahrkomfort. Vorstehend wurde bereits erwähnt, dass für jedes der Zielkriterien wenigstens eine Bewertungsvariable festgelegt wird, die das jeweilige Zielkriterium quantitativ beschreiben kann. Das Zielkriterium eines Fahrkomforts kann beispielsweise quantitativ mit einer Bewertungsvariablen beschrieben werden, die eine Veränderung des aktuellen Moments, insbesondere das Auftreten eines Momentensprungs, angibt. Je höher die Momentensprünge sind, desto niedriger ist der Fahrkomfort für den Fahrer. Zur quantitativen Beschreibung der Kraftstoffverbrauchsminimierung kann beispielsweise eine Bewertungsvariable verwendet werden, die den in den Zylindern eines Verbrennungsmotors durchsetzten Kraftstoffmassenstrom angibt.

Gemäß einer bevorzugten Ausführungsform der Erfindung werden zur Bestimmung der optimalen Leistungsverteilungen, die jeweils für jede Betriebsart der ersten Auswahl möglicher Betriebsarten bestimmt werden, die folgenden Schritte durchgeführt, wobei die Schritte jeweils für jede Betriebsart der ersten Auswahl durchgeführt werden:
Bestimmung eines Optimalwerts jeder Bewertungsvariablen in der jeweiligen Betriebsart, der anhand der zuvor bestimmten Werte der jeweiligen Bewertungsvariable in der jeweiligen Betriebsart ermittelt wird. Dieser Optimalwert wird nachfolgend als "erster Optimalwert" bezeichnet, um diesen Optimalwert von einem nachfolgenden "zweiten Optimalwert" zu unterscheiden, der im Rahmen der nachfolgenden Auswahl der optimalen Betriebsart bestimmt wird.

Gemäß einem weiteren Schritt dieser bevorzugten Ausführungsform wird dann zur Bestimmung der optimalen Leistungsverteilung jeder Betriebsart für jede Bewertungsvariable eine gewichtete erste Abweichung der Werte der jeweiligen Bewertungsvariablen von dem bestimmten ersten Optimalwert der jeweiligen Bewertungsvariable bestimmt. Wie vorstehend erwähnt, werden diese gewichteten ersten Abweichungen für die Bewertungsvariablen auch in jeder Betriebsart bestimmt. Für jeden Betriebspunkt einer möglichen Leistungsverteilung einer Betriebsart wird somit diese gewichtete erste Abweichung jeder der Bewertungsvariablen berechnet. Zur Berechnung der gewichteten ersten Abweichungen werden vorzugsweise entsprechende Bewertungs- bzw. Gewichtungsfaktoren vorgegeben, die die Abweichungen der einzelnen Bewertungsvariablen von ihrem ersten Optimalwert bewerten und auf eine gemeinsame Vergleichsbasis skalieren.

Gemäß einem weiteren Schritt dieser bevorzugten Ausführungsform erfolgt anschließend eine Bestimmung der optimalen Leistungsverteilung der jeweiligen Betriebsart unter Verwendung einer vorbestimmten ersten Entscheidungsregel, die in Abhängigkeit von den bestimmten gewichteten ersten Abweichungen der Bewertungsvariablen eine optimale Leistungsverteilung festlegt.

Ist das Zielkriterium einer Bewertungsvariablen, deren erster Optimalwert bestimmt wird, ein Extremierungsziel, dann wird der erste Optimalwert als ein Extremwert der bestimmten Werte der jeweiligen Bewertungsvariable in der jeweiligen Betriebsart festgelegt.

Ist das Extremierungsziel ein Maximierungsziel, beispielsweise die Maximierung der Energieeffizienz der elektrischen Traktionsmaschine oder die Maximierung des Fahrkomforts, wird der Maximalwert der Werte der Bewertungsvariablen, die sich für die möglichen Leistungsverteilungen einer Betriebsart ergeben, als der jeweilige erste Optimalwert festgelegt.

Ist das Zielkriterium einer Bewertungsvariable jedoch ein Approximierungsziel, beispielsweise, wenn das Zielkriterium sicherstellen soll, dass der Traktionsenergiespeicher vorbestimmte Ladezustandsgrenzen einhält, kann der erste Optimalwert als ein von den bestimmten Werten der Bewertungsvariable in der jeweiligen Betriebsart unabhängiger Sollwert vorgegeben werden, z. B. in Form eines Sollwerts für die aktuelle Sollleistung des elektrischen Traktionsenergiespeichers, die in Abhängigkeit von aktuellen Fahrzeuginformationen, z. B. dem aktuellen Ladezustand, berechnet wird.

Ein Vorteil dieser Ausführungsform liegt darin, dass die verschiedenen Zielkriterien nicht in Form von einzelnen Teilkostenfunktionen zu einer Gesamtkostenfunktion summiert werden müssen. Stattdessen wird jedes Zielkriterium zunächst für sich und unabhängig von den anderen Zielkriterien im Hinblick auf die unterschiedlichen Betriebsarten und darin möglichen Leistungsverteilungen bewertet und dann mittels der gewichteten Abweichungen auf ein gemeinsames Bewertungsschema transferiert. Dieser Ansatz bietet den Vorzug, dass das Verfahren bei Bedarf auf einfache Weise um weitere gewünschte Zielkriterien erweitert werden kann. In diesem Fall ist es lediglich erforderlich, für das neue Zielkriterium eine geeignete weitere Bewertungsvariable festzulegen, die das Zielkriterium quantitativ beschreibt, und die vorgenannten Schritte analog zusätzlich für die weitere Bewertungsvariable durchzuführen. Eine Anpassung einer komplexen mathematischen Formel, wie dies bei einer Gesamtkostenfunktion notwendig wäre, ist nicht erforderlich.

Gemäß einer weiteren bevorzugten Ausführungsform werden zur Auswahl einer optimalen Betriebsart aus der ersten Auswahl möglicher Betriebsarten die folgenden Schritte durchgeführt:
Für jede Bewertungsvariable wird anhand ihrer bestimmten Werte ein für alle Betriebsarten der ersten Auswahl gültiger zweiter Optimalwert der Bewertungsvariablen bestimmt. Im Unterschied zum ersten Optimalwert, der als "lokaler" Optimalwert für jede Bewertungsvariable in jeder Betriebsart bestimmt wird, wird der zweite Optimalwert als ein für alle Betriebsarten gültiger "globaler" Optimalwert bestimmt, so dass für jede Bewertungsvariable jeweils ein zweiter Optimalwert festgelegt wird, unabhängig von der Betriebsart.

Gemäß dieser weiteren bevorzugten Ausführungsform wird zur Auswahl der optimalen Betriebsart ferner eine gewichtete zweite Abweichung bestimmt, die jeweils für jede Bewertungsvariable in jeder Betriebsart der ersten Auswahl bestimmt wird und die jeweils eine gewichtete Abweichung des zweiten Optimalwerts der jeweiligen Bewertungsvariable vom Wert der Bewertungsvariablen im Betriebspunkt der bestimmten optimalen Leistungsverteilung für die jeweilige Betriebsart angibt. Mit anderen Worten wird für jede Betriebsart der ersten Auswahl eine gewichtete betragsmäßige Differenz bestimmt, die eine Abweichung des Werts der Bewertungsvariable in der optimalen Leistungsverteilung vom betriebsartenunabhängigen zweiten Optimalwert der Bewertungsvariable angibt.

Anschließend erfolgt die Auswahl der optimalen Betriebsart unter Verwendung einer vorbestimmten zweiten Entscheidungsregel, die die Betriebsarten der ersten Auswahl jeweils in Abhängigkeit von den gewichteten zweiten Abweichungen der Bewertungsvariablen bewertet und eine optimale Betriebsart festlegt.

Ist das von der Bewertungsvariable beschriebene Ziel ein Extremierungsziel, dann wird der zweite Optimalwert vorzugsweise als ein Extremwert der Werte der jeweiligen Bewertungsvariable im Betriebspunkt der zuvor bestimmten optimalen Leistungsverteilung in allen Betriebsarten der ersten Auswahl festgelegt. Der zweite Optimalwert einer bestimmten Bewertungsvariablen entspricht somit bei einem Maximierungsziel dem Maximalwert der Werte dieser Bewertungsvariablen in den verschiedenen Betriebsarten im Betriebspunkt der optimalen Leistungsverteilung. Ist das Zielkriterium ein Minimierungsziel, wird entsprechend das Minimum dieser Werte als der zweite Optimalwert festgelegt. Falls das mit der Bewertungsvariable beschriebene Zielkriterium ein Approximierungsziel ist, wird der zweite Optimalwert jedoch als ein von den bestimmten Werten der jeweiligen Bewertungsvariable unabhängiger Sollwert vorgegeben, der wiederum in Abhängigkeit von aktuellen Fahrzeuginformationen berechnet werden kann.

Vorstehend wurde bereits erwähnt, dass zur Bestimmung der gewichteten ersten Abweichung oder der Bestimmung der gewichteten zweiten Abweichung jeweils wenigstens ein Gewichtungsfaktor bzw. Bewertungsfaktor für jede Bewertungsvariable bereitgestellt werden kann, der die betragsmäßige Differenz der Werte der Bewertungsvariablen von dem ersten bzw. zweiten Optimalwert der jeweiligen Bewertungsvariable auf eine dimensionslose Basis oder eine für alle Bewertungsvariablen gemeinsame Kostenbasis, d. h. eine Basis mit einer gemeinsamen Einheit, skaliert.

Mittels der Gewichtungsfaktoren können Bewertungsvariablen, die unterschiedlichste Zielkriterien, wie beispielsweise die Maximierung der Energieeffizienz der elektrischen Traktionsmaschine, Kraftstoffverbrauchminimierung, Emissionsminimierung etc., quantitativ beschreiben, auf eine gemeinsame und damit vergleichbare Basis transferiert und zugleich bewertet werden. Eine Bewertung in diesem Sinne bedeutet, dass eine Abweichung von beispielsweise x % einer ersten Variable, die beispielsweise eine Energieeffizienz bewertet, von ihrem Optimalwert kritischer bewertet werden kann als eine 10%ige Abweichung einer ein Emissionsziel beschreibenden zweiten Bewertungsvariable von ihrem Optimalwert. Diese unterschiedliche Gewichtung bzw. Bewertung der Bewertungsvariablen kann so auf einfache Weise anhand der Festlegung der Gewichtungsfaktoren vorgenommen werden.

Vorstehend wurde ferner bereits erwähnt, dass die Bestimmung der optimalen Leistungsverteilung jeder Betriebsart unter Verwendung einer ersten Entscheidungsregel erfolgt, der als Eingangsdaten die bestimmten gewichteten ersten Abweichungen der Bewertungsvariablen zugeführt werden, aus denen ein optimales Element gemäß den Entscheidungsregeln ausgewählt wird. In vergleichbarer Weise wird zur Auswahl der optimalen Betriebsart eine zweite Entscheidungsregel verwendet, der als Eingangsdaten die gewichteten zweiten Abweichungen der Bewertungsvariablen zugeführt werden.

Eine derartige Auswahl eines optimalen Elements aus einer Mehrzahl von mittels Bewertungsvariablen bewerteten Varianten unter Verwendung von Entscheidungsregeln ist an sich aus dem Gebiet der Spieltheorie bzw. dem Gebiet der multikriteriellen Entscheidungsprobleme bekannt. Als Entscheidungsregeln können die auf diesen Gebieten an sich bekannten verschiedenen Arten von Entscheidungsregeln verwendet werden, wie beispielsweise das Minimax-Prinzip oder die sogenannte lexikographische Ordnung, etc.. Es ist anzumerken, dass die bekannten Entscheidungsregeln jeweils unterschiedliche Stärken und Schwächen aufweisen, so dass die Verwendung einer bestimmten Entscheidungsregel immer bestimmte Vorteile und Nachteile mit sich bringt.

Im Rahmen der Erfindung wurde festgestellt, dass es für das vorliegende erfindungsgemäße Verfahren zur Auswahl einer optimalen Betriebsart besonders vorteilhaft ist, wenn die zweite Entscheidungsregel so ausgebildet ist, dass die gewichteten zweiten Abweichungen der Bewertungsvariablen jeweils einer Betriebsart summiert werden und diejenige Betriebsart als optimale Betriebsart festgelegt wird, deren Summenwert der summierten zweiten Abweichungen minimal ist. Gemäß dieser Variante wird somit anhand der Summenwerte die Betriebsart als optimale Betriebsart ausgewählt, die die geringste Gesamtschadenssumme in Form der summierten zweiten Abweichungen aufweist.

Dagegen ist es besonders vorteilhaft, wenn die erste Entscheidungsregel, die zur Bewertung der ersten Abweichungen, d. h. der Abweichungen von den lokalen ersten Optimalwerten, verwendet wird, eine Minimax-Entscheidungsregel ist. Hierbei kann gemäß der ersten Entscheidungsregel an jedem Betriebspunkt der möglichen Leistungsverteilungen einer Betriebsart jeweils aus den Werten der gewichteten ersten Abweichungen der Bewertungsvariablen die größte erste Abweichung ermittelt werden und derjenige Betriebspunkt als Betriebspunkt der optimalen Leistungsverteilung festgelegt werden, der die kleinste der so ermittelten größten ersten Abweichungen aufweist. Gemäß dieser Variante wird zur Bestimmung der optimalen Leistungsverteilung gemäß dem Minimax-Prinzip der "schlechteste Fall" minimiert, was nach Erkenntnissen der Erfinder bei der Bestimmung der optimalen Leistungsverteilung einen besseren Kompromiss der Zielkriterien ermöglicht als eine einfache Addition.

Eine weitere besonders vorteilhafte Ausführungsform der Erfindung sieht vor, dass die erste Auswahl der Betriebsarten, auf deren Basis die vorgenannte Bestimmung der optimalen Leistungsverteilung je Betriebsart und die nachfolgende Bestimmung der optimalen Betriebsart durchgeführt wird, bereits um prinzipiell mögliche Betriebsarten des Hybridfahrzeugs, die aber jedoch im aktuellen Fahrzeugbewegungszustand nicht möglich sind und/oder die aufgrund anderer Restriktionsregeln ausgeschlossen sind, bereinigt ist. Diese Einschränkung der Betriebsarten ermöglicht eine signifikante Reduktion des Rechenaufwandes bei der nachfolgenden Bestimmung der optimalen Leistungsverteilung und der optimalen Betriebsart.

Gemäß dieser Variante umfasst die Bestimmung der ersten Auswahl der Betriebsarten somit die folgenden Schritte: Vorgabe von möglichen Fahrzeugbewegungszuständen des Hybridfahrzeugs, Vorgabe von möglichen Betriebsarten des Antriebsstrangs und Vorgabe einer Zuordnung, die angibt, welche der möglichen Betriebsarten in welchem Fahrzeugbewegungszustand zulässig sind; Bestimmung eines aktuellen Fahrzeugbewegungszustands; und Einschränkung der Betriebsarten des Fahrzeugs auf diejenigen, die dem bestimmten aktuellen Fahrzeugbewegungszustand zugeordnet sind.

Die vorgegebenen möglichen Fahrzeugbewegungszustände können beispielsweise einen Fahrzeugstillstand, einen Bremsbetrieb und einen Fahrbetrieb (ohne Bremsen), nachfolgend auch als "Fahren" bezeichnet, umfassen. So können beispielsweise einem Fahrzeugbewegungszustand "Fahren" die Betriebsarten verbrennungsmotorisch Fahren, elektrisch Fahren, Lastpunktanhebung und Lastpunktabsenkung zugeordnet sein. Dem Fahrzeugbewegungszustand "Bremsen" können die Betriebsarten konventionelles Bremsen, Bremsrekuperation und Segeln zugeordnet sein. Dem Fahrzeugbewegungszustand "Stillstand" können die Betriebsarten Leerlauf und der GenSet zugeordnet sein.

Diese in Abhängigkeit von dem Fahrzeugbewegungszustand reduzierte Menge der Betriebsarten kann vorteilhafterweise weiter reduziert werden, indem wenigstens eine Restriktionsregel vorgegeben wird, die in Abhängigkeit von wenigstens einem Betriebsparameter und vorzugsweise unabhängig von einer aktuellen Momentenanforderung und dem aktuellen Fahrzeugbewegungszustand festlegt, welche Betriebsarten aktuell zur Verfügung stehen. Gemäß dieser wenigstens einen Restriktionsregel kann dann eine weitere Einschränkung der Betriebsarten des Fahrzeugs auf diejenigen vorgenommen werden, die aktuell zur Verfügung stehen. Beispielsweise kann gemäß der wenigstens einen Restriktionsregel eine Verfügbarkeit von Komponenten im Antriebsstrang geprüft werden, insbesondere eines elektrischen Energiespeichers und/oder einer elektrischen Traktionsmaschine. Beispielsweise kann die Restriktionsregel vorgeben, dass alle Betriebsarten, die den Einsatz der elektrischen Maschine erfordern, aktuell nicht zulässig sind, wenn der elektrische Energiespeicher vorbestimmte Temperaturgrenzen überschreitet und/oder sich außerhalb vorbestimmter Ladezustandsgrenzen befindet. Auf diese Weise können somit bereits vor Beginn der Berechnung der optimalen Leistungsverteilung je Betriebsart diejenigen Betriebsarten ausgeschlossen werden, die im aktuellen Betriebszustand des Fahrzeugs nicht zur Verfügung stehen.

Gemäß einem weiteren Aspekt der Erfindung können bei der Bestimmung der optimalen Leistungsverteilung je Betriebsart anhand vordefinierter Ausschlusskriterien bestimmte Werte der Leistungsverteilungen der Betriebsarten bestimmt werden, die als mögliche Betriebspunkte ausgeschlossen werden sollen. Die Ausschlusskriterien werden vorzugsweise so definiert, dass jede mögliche Leistungsverteilung, die nicht ausgeschlossen wird, generell schon einen akzeptablen Auswahlkandidaten darstellt. So werden die optimale Betriebsart und/oder eine optimale Leistungsverteilung nur auf Basis von vergleichsweise "guten" Leistungsverteilungen gesucht und das Risiko einer falschen Entscheidung reduziert.

Die Erfindung betrifft ferner ein Hybridfahrzeug, insbesondere ein Nutzfahrzeug, aufweisend eine Steuereinrichtung zur Auswahl einer Betriebsart des Hybridfahrzeugs, die eingerichtet ist, das Verfahren wie hierin offenbart durchzuführen. Zur Vermeidung von Wiederholungen sollen rein verfahrungsgemäß offenbarte Merkmale auch als vorrichtungsgemäße Merkmale der Steuereinrichtung offenbart gelten und beanspruchbar sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Ablaufdiagramm eines Verfahrens zur Auswahl einer Betriebsart eines Hybridfahrzeugs gemäß einer Ausführungsform der Erfindung;
- Figur 2: ein alternatives Ablaufdiagramm zur Illustration des erfindungsgemäßen Verfahrens gemäß einer Ausführungsform;
- Figur 3: ein Ablaufdiagramm der Schritte zur Bestimmung eines optimalen E-Moments für jede Betriebsart gemäß einer Ausführungsform der Erfindung;
- Figur 4: ein Ablaufdiagramm zur Illustration der Bestimmung der optimalen Betriebsart auf Basis der bestimmten optimalen Leistungsverteilungen gemäß einer Ausführungsform der Erfindung;
- Figur 5: eine alternative Darstellung zur Illustration der Bestimmung der optimalen Leistungsverteilungen und der optimalen Betriebsart gemäß einer Ausführungsform der Erfindung;
- Figur 6: eine beispielhafte Illustration der Berechnung einer optimalen Leistungsverteilung für eine Betriebsart;
- Figur 7: eine beispielhafte Illustration der Bestimmung der optimalen Betriebsart auf Basis der bestimmten optimalen Leistungsverteilungen; und
- Figur 8: eine Zuordnung, die angibt, welche der möglichen Betriebsarten in welchem Fahrzeugbewegungszustand zulässig sind.

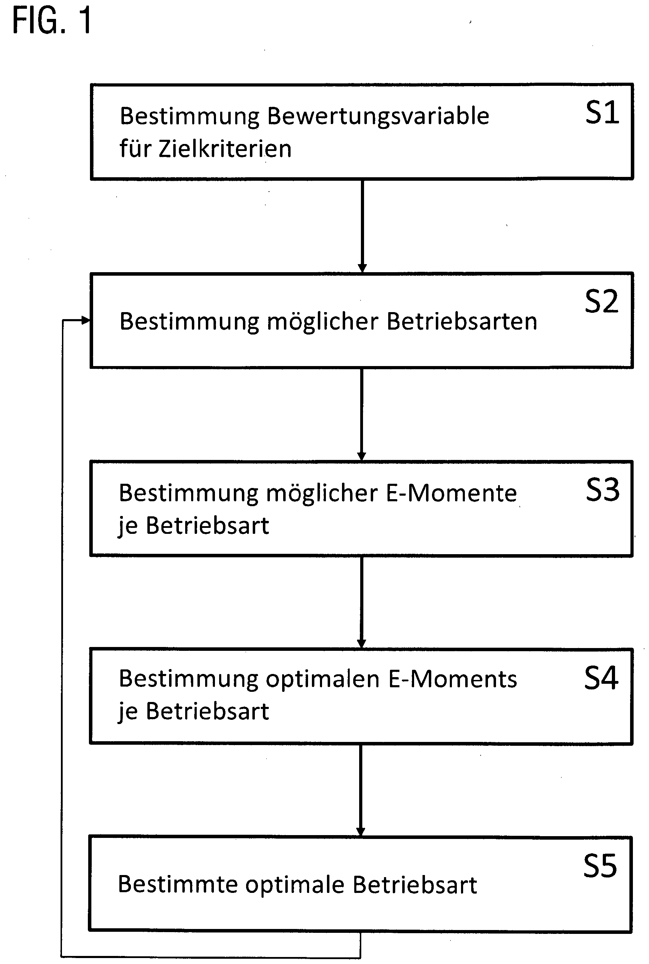

Figur 1 zeigt ein beispielhaftes Ablaufdiagramm zur Illustration der Schritte eines Verfahrens zur Auswahl einer Betriebsart eines Hybridfahrzeuges gemäß einer bevorzugten Ausführungsform. Gemäß der vorliegenden Ausführungsform ist das Hybridfahrzeug als Parallel-Hybridfahrzeug, insbesondere als ein solches Nutzfahrzeug, ausgebildet. Der an sich bekannte hybridisierte Antriebsstrang umfasst einen Verbrennungsmotor und eine elektrische Traktionsmaschine, wobei der Verbrennungsmotor und die elektrische Traktionsmaschine, nachfolgend auch als elektrische Maschine oder E-Maschine bezeichnet, über eine gemeinsame Welle drehzahlgekoppelt, jedoch voneinander unabhängig ansteuerbar sind.

Mit dem hybridisierten Antriebsstrang können unterschiedliche an sich bekannte Betriebsarten ausgeführt werden, beispielsweise ein rein verbrennungsmotorisches Fahren, ein rein elektrisches Fahren, ein Boost-Betrieb, ein Segelbetrieb, eine Bremsrekuperation, ein elektrisches Anfahren, eine Lastpunktanhebung, eine Lastpunktabsenkung, ein sogenannter GenSet-Betrieb etc..

Die verschiedenen Betriebsarten sollen im Fahrzeugbetrieb sinnvoll eingesetzt werden, um eine größtmögliche Reduzierung des Kraftstoffverbrauchs zu erreichen, wobei auch weitere vorgegebene Ziele beachtet werden sollen, wie die Maximierung der Energieffizienz der elektrischen Traktionsmaschine, die Emissionsminimierung und/oder der Fahrkomfort. Zur Realisierung einer optimalen Betriebsstrategie des Hybridfahrzeugs ist es daher erforderlich, aus einer vorgegebenen Menge möglicher Betriebsarten des hybridisierten Antriebsstrangs eine für den aktuellen Betriebszeitpunkt hinsichtlich der vorgegebenen Zielkriterien optimale Betriebsart mit einer korrespondierenden optimalen Leistungsverteilung im Antriebsstrang auszuwählen, d. h. in jedem Betriebszeitpunkt diejenige Betriebsart auszuwählen, die hinsichtlich der Zielkriterien den aktuell bestmöglichen Kompromiss bietet.

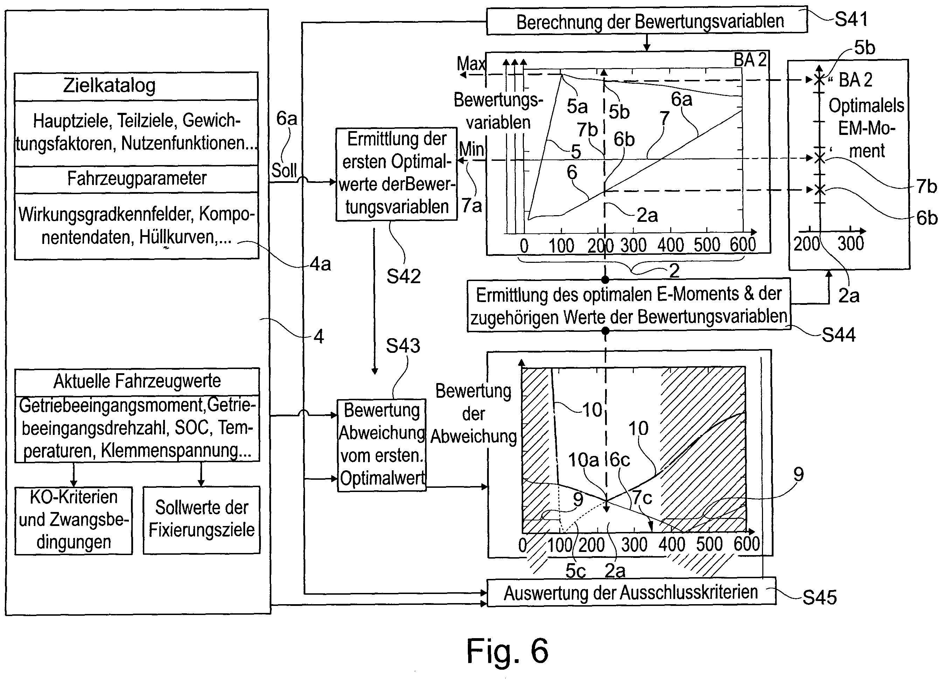

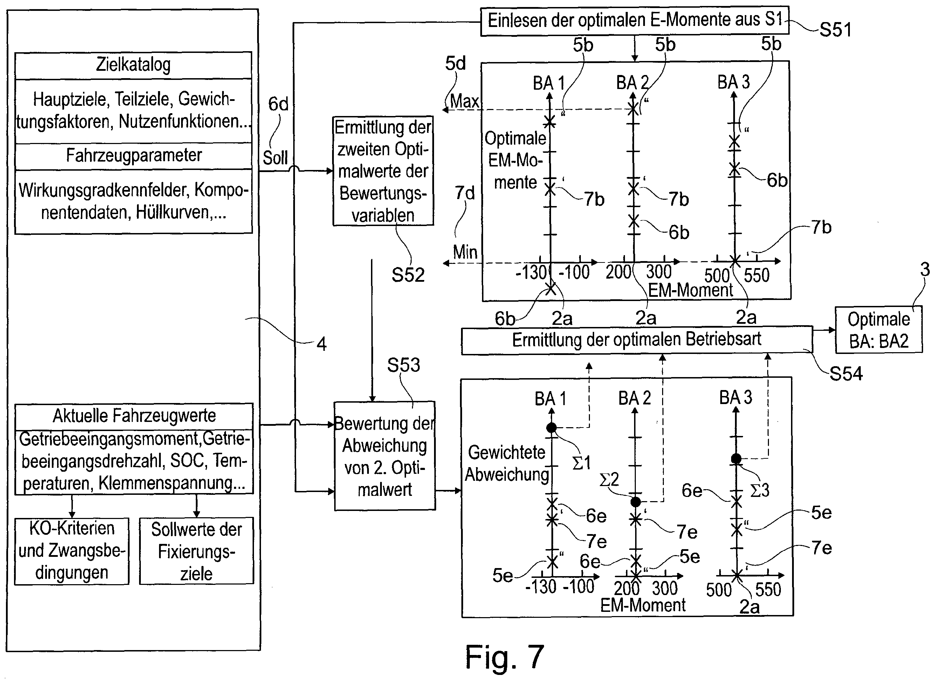

In Schritt S1 wird zunächst Offline, d. h. vor Durchführung des eigentlichen Online-Optimierungsverfahrens, für jedes der Zielkriterien wenigstens eine geeignete Bewertungsvariable festgelegt, mittels der das jeweilige Zielkriterium quantitativ beschrieben werden kann. Dies ist nachfolgend beispielhaft noch detaillierter anhand der Figuren 6 und 7 erläutert.

Im Betrieb des Fahrzeugs und im Rahmen des eigentlichen Online-Optimierungsverfahrens werden dann fortlaufend die Schritte S2 bis S5 durchgeführt, d. h., die Schritte S2 bis S5 werden jeweils im Abstand von einigen Millisekunden erneut durchgeführt, um so fortlaufend in Abhängigkeit von aktuellen Fahrzeugwerten jeweils die für den aktuellen Fahrzeugzustand optimale Betriebsart auszuwählen und einzustellen.

Gemäß der Schritte S2 bis S5 wird in einem mehrstufigen Prozess aus der Menge aller mit dem System möglichen Betriebsarten eine bezüglich der Optimierungskriterien optimale Betriebsart zusammen mit einer optimalen Leistungsverteilung ausgewählt.

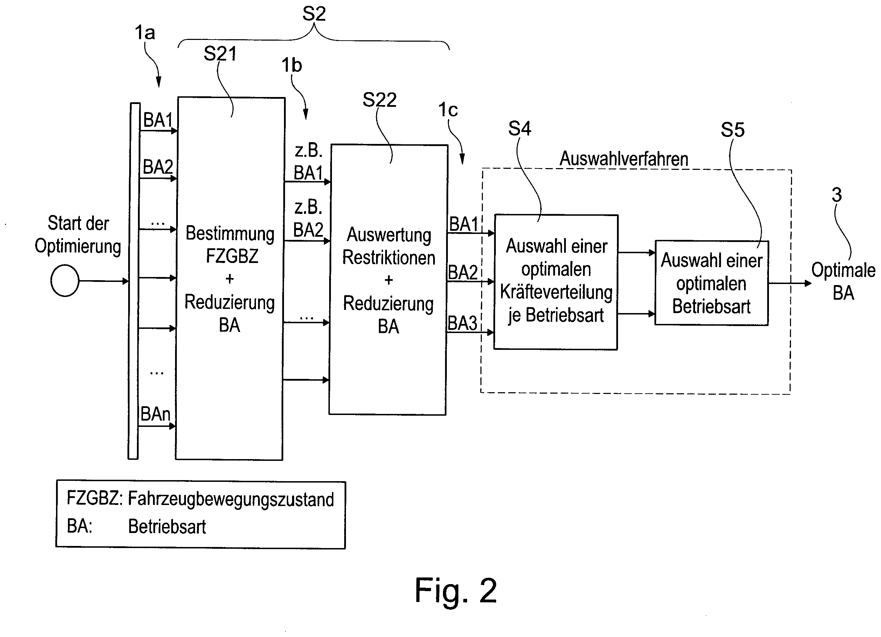

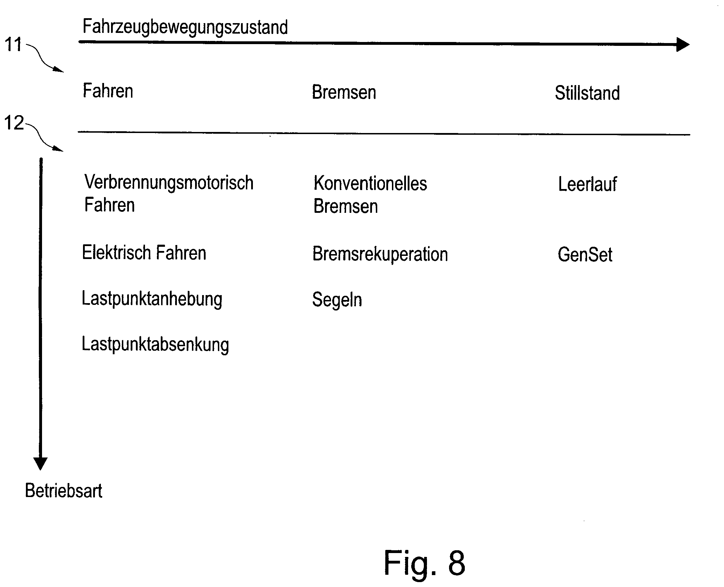

In Schritt S2 erfolgt hierzu zunächst eine Reduktion der Betriebsarten auf eine aktuell gültige Menge, was in den Figuren 2 und 8 näher erläutert ist.

Bei einem Startzeitpunkt der Optimierung bzw. des jeweiligen Berechnungszyklus werden dem mehrstufigen Auswahlverfahren zunächst alle mit dem hybridisierten Antriebsstrang realisierbaren Betriebsarten BA1 bis BAn zur Bewertung vorgestellt.

Figur 8 listet die möglichen Fahrzeugbewegungszustände 11 des Hybridfahrzeugs auf: Die vorgegebenen möglichen Fahrzeugbewegungszustände sind beispielsweise Fahrzeugstillstand, Bremsbetrieb und Fahrbetrieb (ohne Bremsen). Bekanntermaßen kann nicht jede der Betriebsarten in jedem der möglichen Fahrzeugbewegungszustände 11 des Fahrzeugs realisiert werden. Die Zuordnung 12, die angibt, welche der möglichen Betriebsarten 12 jeweils in einem bestimmten Fahrzeugbewegungszustand 11 möglich sind, wurde vorab festgelegt und z. B. in Form einer Tabelle im Fahrzeug hinterlegt, auf die in Schritt S2 zugegriffen wird.

Aus der Zuordnung 12 ist beispielsweise erkennbar, dass beispielsweise einem Fahrzeugbewegungszustand "Fahren" die Betriebsarten verbrennungsmotorisch Fahren, elektrisch Fahren, Lastpunktanhebung und Lastpunktabsenkung zugeordnet sind. Dem Fahrzeugbewegungszustand "Bremsen" sind die Betriebsarten konventionelles Bremsen, Bremsrekuperation und Segeln zugeordnet. Dem Fahrzeugbewegungszustand "Stillstand" sind die Betriebsarten Leerlauf und der GenSet zugeordnet.

Die in Figur 8 gezeigten Betriebsarten je Fahrzeugbewegungszustand sind nur beispielhaft und können durch weitere mögliche Betriebsarten erweitert werden, je nach Ausführung des Hybridfahrzeugs.

In Schritt S21 der Figur 2 wird zunächst der aktuelle Fahrzeugbewegungszustand bestimmt und dann die Einschränkung der Betriebsarten des Fahrzeuges auf diejenigen vorgenommen, die dem bestimmten aktuellen Fahrzeugbewegungszustand gemäß der in Figur 8 gezeigten Zuordnung 12 zugeordnet sind. Befindet sich somit das Fahrzeug aktuell im Fahrzeugbewegungszustand "Fahren", werden im nachfolgenden Schritt S22 nur noch diejenigen Betriebsarten zugeführt, die über den Fahrzeugbewegungszustand "Fahren" als mögliche Betriebsarten zugeordnet sind. Die reduzierte Menge der Betriebsarten 1b wird daraufhin in Schritt S22 weiterverarbeitet.

In Schritt S22 werden anhand definierter Regeln Restriktionen für einzelne Betriebsarten ausgewertet. Restriktionen gehen z. B. von der Verfügbarkeit von Komponenten aus. Derartige Restriktionen können beispielsweise thermische Restriktionen beinhalten, die prüfen, ob die E-Maschine oder der Traktionsenergiespeicher der elektrischen Maschine zu heiß geworden ist, so dass diejenigen Betriebsarten, die die E-Maschine benötigen, im aktuellen Zeitpunkt nicht zur Verfügung stehen und folglich in diesem Fall von der Liste möglicher Betriebsarten ausgeschlossen werden. Derartige Restriktionsregeln können auch prüfen, ob die Maschine aus anderen Gründen verfügbar ist oder nicht. Diese Restriktionen sind jedoch nicht momentenbezogen, sondern derartige Kriterien werden erst in den nachfolgenden Schritten (z. B. S45, S55), z. B. im Rahmen der Ausschlusskriterien, einbezogen. Die Anzahl der möglichen Betriebsarten 1b kann also in Schritt S22 aufgrund von vorgegebener Restriktionsregeln optional weiter eingeschränkt werden, so dass schließlich eine erste Auswahl möglicher Betriebsarten 1c dem nachfolgenden zweistufigen Auswahlverfahren der Schritte S3 bis S5 zugeführt wird. Lediglich beispielhaft soll angenommen werden, dass im aktuellen Fahrzustand und Berechnungszeitpunkt des Verfahrens die möglichen Betriebsarten der ersten Auswahl 1c auf nur noch drei Betriebsarten reduziert wurden, die nachfolgend als BA1, BA2 und BA3 bezeichnet werden.

In Schritt S3, der in Figur 2 nicht eingezeichnet ist, werden zunächst für jede der nach der Reduktion der Betriebsarten verbliebenen Betriebsarten 1c mögliche Leistungsverteilungen im Antriebsstrang ermittelt. Im vorliegenden Ausführungsbeispiel eines Parallel-Hybridfahrzeugs wird die mögliche Leistungsverteilung durch die Angabe der mit der elektrischen Maschine im aktuellen Betriebszustand realisierbaren Momente gegeben. Bei der Berechnung der möglichen Momente der E-Maschine wird die Leistungsfähigkeit der E-Maschine berücksichtigt. Aus jedem möglichen Moment der E-Maschine ergibt sich dann das verbleibende, vom Verbrennungsmotor aufzubringende Moment als Differenz von aktuell angefordertem Fahrerwunschmoment abzüglich dem Moment der E-Maschine, so dass die Leistungsverteilung eindeutig festgelegt ist. Als Ergebnis des Schritts S3 ergibt sich somit für jede Betriebsart ein Bereich der möglichen Werte für die E-Maschinenmomente. Die möglichen Werte für die E-Maschinenmomente werden in diskreten Schritten berechnet, z. B. in Schritten von 10 Nm.

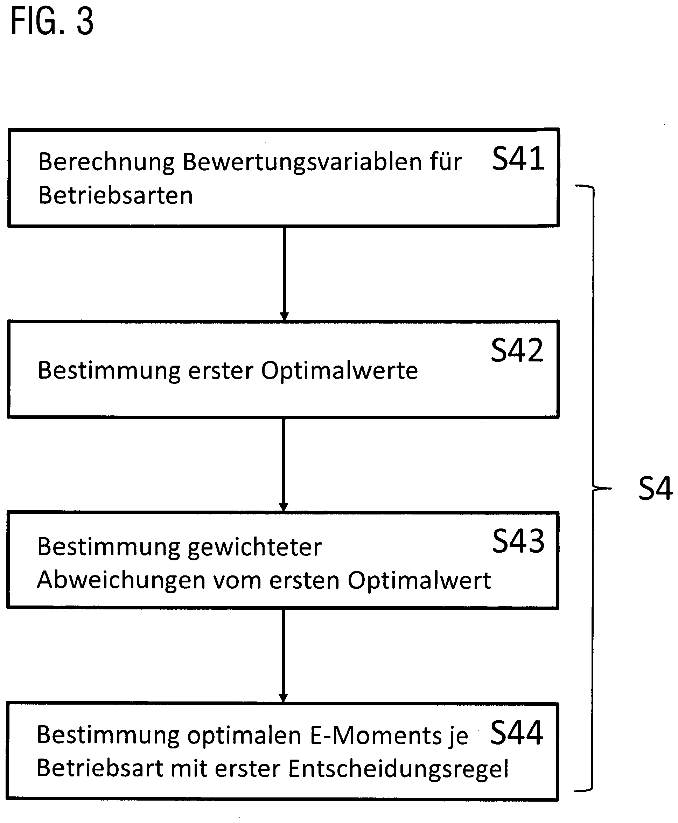

In Schritt S4 erfolgt dann die Berechnung des optimalen E-Maschinenmoments je Betriebsart. Die Unterschritte des Schritts S4 sind in den Figuren 3, 5 und 6 jeweils in unterschiedlichen Darstellungen illustriert.

Im oberen Diagramm der Figur 6 geben die Werte der Abszisse beispielhaft die in Schritt S3 bestimmten möglichen E-Momente einer der Betriebsarten der ersten Auswahl 1c an, hier beispielhaft für die Betriebsart BA2. Die Betriebsart BA2 stellt vorliegend die Betriebsart einer Lastpunktabsenkung dar, bei der die zur Erfüllung des positiven Fahrerwunschmomentes benötigte Leistung sowohl vom Verbrennungsmotor als auch von der E-Maschine bereitgestellt wird. Die Lastpunktabsenkung wird zur Betriebspunktoptimierung des Verbrennungsmotors bzw. zur gezielten Entladung des Energiespeichers verwendet. Für diese Betriebsart wurden im aktuellen Betriebszustand mögliche E-Momente 2 im Bereich von 0-600 Nm in diskreten Schritten von 10 Nm bestimmt (vgl. Schritt S3).

In den Schritten S41 und S42 werden dann die Werte der Bewertungsvariablen für jede Betriebsart berechnet und anschließend der erste Optimalwert für jede Bewertungsvariable in der jeweiligen Betriebsart bestimmt.

Die im Diagramm gezeichneten Kurven 5 und 6 sowie die Horizontallinie 7 geben den in Schritt S41 berechneten Verlauf der Werte dreier Bewertungsvariablen in Abhängigkeit von den bestimmten möglichen Momenten 2 der E-Maschine bzw. der Leistungsverteilung an.

Gemäß dem vorliegenden Beispiel gibt die Kurve 5 den Verlauf einer Bewertungsvariable "Wirkungsgrad der elektrischen Traktionsmaschine" an. Die Einheit dieser Bewertungsvariable ist dimensionslos. Diese Bewertungsvariable wird zur quantitativen Beschreibung des Zielkriteriums einer Maximierung der Energieeffizienz der elektrischen Traktionsmaschine verwendet.

Das Zielkriterium der Maximierung der Energieeffizienz der elektrischen Traktionsmaschine ist ein Maximierungsziel, d. h., die Energieeffizienz soll maximiert werden. Folglich wird in Schritt S42 als erster Optimalwert 5a der Bewertungsvariable "Wirkungsgrad der elektrischen Traktionsmaschine" der Maximalwert der Kurve 5 bestimmt.

Vorliegend weist der Verlauf 5 dieser Bewertungsvariable in Abhängigkeit des Moments 2a der E-Maschine ein Maximum 5a bei einem E-Maschinenmomentwert von z. B. 100 Nm auf. Dies bedeutet, dass der maximale Wirkungsgrad bei einem E-Maschinenmoment von 100 Nm erzielt wird, d. h. wenn die E-Maschine in Reaktion auf ein positives aktuelles Fahrerwunschmoment 100 Nm stellt und die verbleibende Differenz zum Fahrerwunschmoment vom Verbrennungsmotor aufgebracht wird. Es ist aus dem Verlauf 5 erkennbar, dass der Wirkungsgrad bei einem größeren E-Moment als 100 Nm wieder abfällt. Dies liegt z. B. darin, dass die Verlustleistung hin zu höheren Drehmomenten quadratisch zunimmt. Die Berechnung des Verlaufs 5 erfolgt mittels eines hinterlegten Wirkungsgrad-Kennfeldes 4a der elektrischen Traktionsmaschine.

Die mit dem Bezugszeichen 6 gekennzeichnete Linie im oberen Diagramm der Figur 6 stellt einen Verlauf der Batterieleistung dar und zeigt die Lade- bzw. Entladeleistung des Energiespeichers an, in die der Wirkungsgrad des Traktionsenergiespeichers eingeht. Mit höherem E-Moment, das von der E-Maschine aufzubringen ist, steigt die Entladeleistung an, was durch den Anstieg der Kurve 6 dargestellt ist. Bei dieser Kurve wird kein Maximum oder Minimum des Verlaufs 6 gesucht, sondern das zugeordnete Zielkriterium ist ein Approximierungsziel betreffend den optimalen Ladezustand des Energiespeichers, der in einem vorbestimmten Bereich liegen soll. Ist der Traktionsenergiespeicher vollgeladen, ist es günstig, diesen zu entladen, um nachfolgend wieder genügend Speicherkapazität zur Aufnahme von Rekuperationsenergie zu haben. Ist der Traktionsenergiespeicher stark entladen, ist es günstig, diesen wieder zu laden. Folglich wird der erste Optimalwert für den Verlauf der Kurve 6 als ein Sollwert 6a in Abhängigkeit von aktuellen Fahrzeugdaten, insbesondere in Abhängigkeit von dem aktuellen Ladezustandes des Traktionsenergiespeichers, vorgegeben, der vorliegend durch einen Wert des E-Moments bei 440 Nm erreicht wird.

Der Verlauf der Kurve 7 ist der Verlauf einer weiteren Bewertungsvariable zur Bewertung eines weiteren Ziels. Diese Bewertungsvariable steht beispielhaft für eine Bewertungsvariable, die nicht abhängig vom aktuellen E-Moment ist. Der Verlauf einer solchen Bewertungsvariable zeigt sich als horizontale Gerade über dem E-Moment und gewinnt erst an Bedeutung im nachfolgenden Schritt des Vergleichs der verschiedenen Betriebsarten untereinander. Für diese Bewertungsvariable wird als Optimalwert ein Minimum identifiziert. Aufgrund des konstanten Verlaufs der Kurve 7 ist dieses Minimum 7a keinem bestimmten Drehmoment zugeordnet.

Die ersten optimalen Werte 5a, 6a, und 7a werden nicht nur für die Betriebsart BA2, sondern für alle Betriebsarten der ersten Auswahl bestimmt.

Der dargestellte Verlauf 5, 6, 7 der Werte der Bewertungsvariablen wird bei jedem Durchlauf der Schritte S2 bis S5 neu berechnet. Den einzelnen Berechnungsschritten stehen hier Informationen wie aktuelle Messdaten, Fahrzeug- und Komponentenparameter sowie Kennfelder zur Verfügung, die von einer Fahrzeugsteuerung 4, die zur Ausführung des Verfahrens eingerichtet ist, verarbeitet werden und in der die Zielgrößen, Ausschlusskriterien (KO-Kriterien), Gewichtungsfaktoren, zu verwendende Fahrzeugparameter etc. hinterlegt sind, was durch den Block 4 lediglich beispielhaft und stark schematisiert angedeutet ist.

Die Berechnung der Verläufe 5, 6, 7 der Bewertungsvariablen erfolgt in Abhängigkeit von aktuellen Messdaten, Fahrzeug- und Komponentenparametern sowie Kennfeldern und ist insbesondere abhängig von der spezifischen Antriebsstrangkonfiguration des Hybridfahrzeugs.

Die so bestimmten Verläufe 5, 6, 7 der Bewertungsvariablen gelten jeweils nur für einen Berechnungszyklus der Schritte S2 bis S5 der Online-Berechnung, d. h., in einem nachfolgenden Berechnungszyklus S2 bis S5, der einige Millisekunden später bzw. in einer anderen Fahrsituation ausgeführt wird, können sich andere Verläufe und andere Optimalwerte 5a, 6a, 7a ergeben, da sich die Fahrzeugparameter und Messdaten laufend ändern.

In Schritt S43 wird für jede Bewertungsvariable jeder Betriebsart die gewichtete erste Abweichung der Werte der jeweiligen Bewertungsvariable von dem bestimmten ersten Optimalwert der jeweiligen Bewertungsvariable ermittelt. Dies ist im unteren Diagramm der Figur 6 dargestellt. Zur Bestimmung der gewichteten Abweichung werden für jede Kurve jeweils die Differenzwerte aus der ursprünglichen Kurve 5, 6, 7 mit dem jeweiligen Optimalwert 5a, 6a bzw. 7a gebildet und zusätzlich mit einem Gewichtungsfaktor (Bewertungsfaktor) skaliert.

Da der Optimalwert 5a einem E-Moment von knapp über 100 Nm zugeordnet ist, weist der Verlauf der gewichteten ersten Abweichung 5c eine Nullstelle bei diesem Drehmomentwert der elektrischen Maschine auf. Entsprechendes gilt für den gewichteten ersten Verlauf 6c der Batterieleistung, die bei dem Sollwert von ca. 440 Nm eine Nullstelle hat. Der gewichtete Verlauf 7c ist im Diagramm schwierig zu erkennen, da er direkt auf der Abszissenachse liegt, was sich aus dem konstanten Verlauf 7 im oberen Diagramm ergibt. Diese Bewertungsvariable fällt somit vorliegend aus der aktuellen Bewertung quasi heraus, weil es keinen Optimalwert gibt.

Über die Skalierung mit dem Gewichtungsfaktor können die bestimmten ersten Abweichungen einerseits auf eine dimensionslose Einheit oder auf eine gemeinsame Einheit, z.B. eine Geldeinheit einer Schadensfunktion, transferiert werden, da die Bewertungsvariablen in der Regel in unterschiedlichen Einheiten angegeben werden. Anderseits ermöglicht die Gewichtung eine Kalibrierung der ersten Abweichungen der Bewertungsvariablen untereinander, um die Bewertungsvariablen untereinander zu priorisieren, da in der Regel die den Bewertungsvariablen zugeordneten Zielkriterien unterschiedlich stark gewichtet bzw. priorisiert werden sollen.

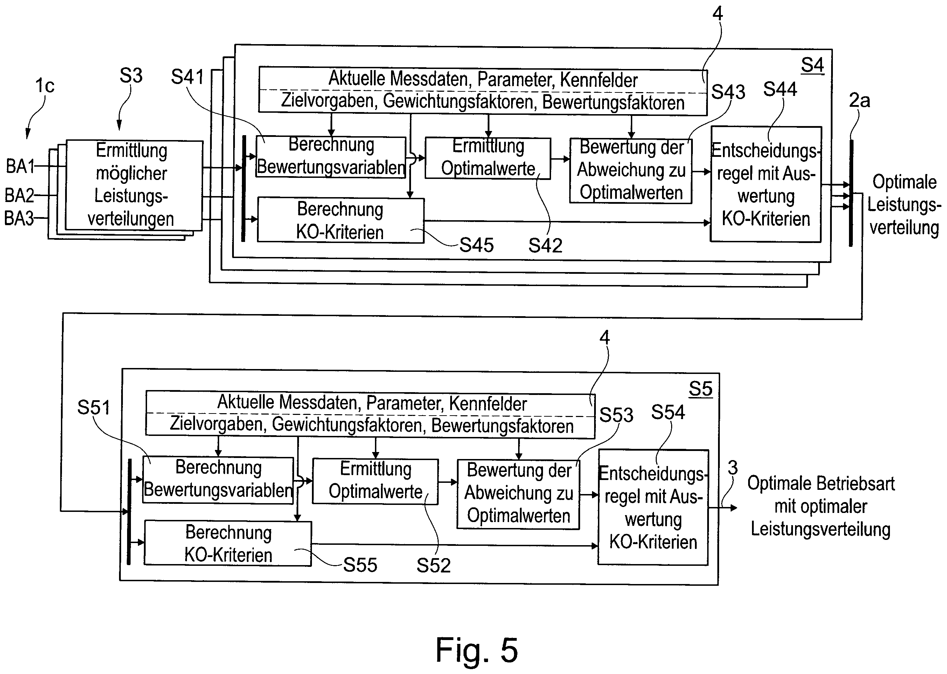

In Figur 5 ist ferner dargestellt, dass optional Ausschlusskriterien (in Figur 5 als "KO-Kriterien" bezeichnet) vorgegeben werden können, die nur gewisse E-Maschinenmomente zulassen können. So werden beispielsweise in Schritt S45 anhand eines vorgegebenen Ausschlusskriteriums nur diejenigen E-Maschinenmomente zugelassen, die einen Mindestwirkungsgrad vorweisen, beispielsweise E-Momente, bei denen der aktuelle Wirkungsgrad der elektrischen Traktionsmaschine mindestens 80 Prozent entspricht. Mit diesen Ausschlusskriterien werden somit bestimmte E-Momente 9 der möglichen Leistungsverteilung je Betriebsart ausgeschlossen, was durch die schraffierten Bereiche im unteren Diagramm der Figur 6 dargestellt ist. In diesen Bereichen werden die Werte der Bewertungsvariable bzw. der gewichteten ersten Abweichung somit bei der nachfolgenden Bestimmung der optimalen Betriebsart nicht berücksichtigt.

Ein Vorteil der Anwendung derartiger Ausschlusskriterien ist, dass diese so festgelegt werden können, dass jedes der dadurch nicht ausgeschlossenen E-Momente somit bereits einen akzeptablen Auswahlkandidaten darstellt, so dass nachfolgend das Optimum der Leistungsverteilung nur innerhalb von akzeptablen Leistungsverteilungen bzw. E-Momenten gesucht wird. Dadurch kann das Risiko einer falschen Entscheidung reduziert werden. Ferner können dadurch Schwächen der nachfolgend angewandten Entscheidungsregeln kompensiert werden, da so zumindest sichergestellt wird, dass immer ein akzeptables E-Moment der Auswahl der optimalen Betriebsart zugrunde gelegt wird.

In Schritt S44 wird nachfolgend ein optimales E-Maschinenmoment 2a unter Verwendung einer vorgegebenen Entscheidungsregel bestimmt.

Möglich wäre beispielsweise eine einfache Addition aller Kurven 5c, 6c, und 7c und Auswahl desjenigen Betriebspunktes, d. h. desjenigen E-Maschinenmoments, das den geringsten Wert der addierten ersten gewichteten Abweichungen 5c, 6c, und 7c aller Bewertungsvariablen je Betriebsart aufweist. Dies stellt den Punkt des geringsten Gesamtschadens dar.

Ein Nachteil dieser vergleichsweise einfachen Entscheidungsregel ist jedoch, dass sich das Optimum unter dem Optimum eines Teilzieles befinden kann. Dies ist dann nachteilig, wenn man hinsichtlich eines Zielkriteriums eine sehr optimale Lösung gefunden hat, dagegen hinsichtlich aller anderen Zielkriterien jedoch eine eher vergleichsweise schlechte Lösung.

Vorzuziehen ist daher eine Lösung, die einen guten Kompromiss zwischen allen Zielkriterien darstellt. Hierfür ist eine Entscheidungsregel basierend auf dem Minimax-Prinzip besser geeignet. Im unteren Diagramm der Figur 6 wurde eine solche Minimax-Entscheidungsregel angewendet, die durch den Verlauf der gestrichpunkteten Kurve 10 dargestellt ist. Die Kurve 10 gibt den schlechtesten Fall an, in dem an jedem Betriebspunkt der möglichen Momente jeweils aus den Werten der gewichteten ersten Abweichungen 5c, 6c, 7c jeweils die größte erste Abweichung ermittelt wird. Als optimale Leistungsverteilung wird dann dasjenige E-Moment 2a ausgewählt, dem die kleinste 10a der ermittelten größten ersten Abweichungen 10 zugeordnet ist. Dies ist vorliegend im Punkt 2a der Fall, da die gestrichpunktete Kurve ihr Minimum 10a bei dem Betriebspunkt 2a hat. Es ist nochmals darauf hinzuweisen, dass in Figur 6 jeweils nur die Bestimmung des optimalen E-Moments für eine Betriebsart, nämlich der Betriebsart "BA2", dargestellt ist. Im Rahmen des Schritts S4 werden jedoch für alle Betriebsarten der ersten Auswahl 1c die Werte der Bewertungsvariablen mit den zugeordneten Optimalwerten und den gewichteten Abweichungen von den ersten Optimalwerten berechnet und anschließend die optimale Leistungsverteilung für die jeweilige Betriebsart bestimmt.

Im rechten oberen Diagramm ist nochmals das Ergebnis des Schritts S44 für die Betriebsart BA2 dargestellt. Aus den möglichen Werten 2 der E-Maschinenmomente in der Betriebsart BA2 wird der Punkt 2a als optimales E-Maschinenmoment bestimmt. Diesem Betriebspunkt 2a der optimalen Leistungsverteilung sind die Werte 5b, 6b, und 7b als zugehörige Werte der Bewertungsvariablen zugeordnet, die nachfolgend dem Schritt S5 zugeführt werden

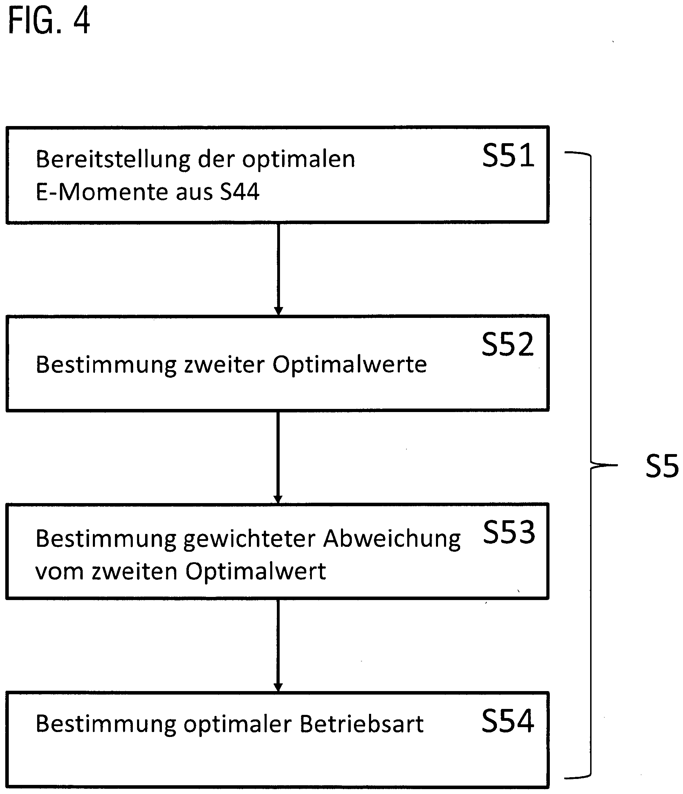

In Schritt S5 erfolgt dann die Bestimmung der optimalen Betriebsart anhand der Ergebnisse aus Schritt S4. Hierfür werden die Schritte S51 bis S54 bzw. S55 durchgeführt, was wiederum in den Figuren 4, 5 und 7 in unterschiedlichen Darstellungen illustriert ist.

In Schritt S51 werden zunächst die optimalen E-Momente für die einzelnen Betriebsarten und die zugehörigen Werte der Bewertungsvariablen 5b, 6b, 7b, die in Schritt S44 bestimmt wurden, als Eingangsdaten bereitgestellt, was im oberen Diagramm der Figur 7 beispielhaft für die drei Betriebsarten BA1, BA2 und BA3 dargestellt ist.

In der Mitte ist wiederum die Betriebsart BA2, die bereits in Figur 6 erläutert wurde, dargestellt mit ihrem optimalen E-Moment 2a in der Höhe von beispielsweise 220 Nm und jeweils den zugehörigen Werten 5b, 6b, 7b der Bewertungsvariablen in diesem Betriebspunkt 2a der optimalen Leistungsverteilung.

Links davon ist die Betriebsart "BA1" dargestellt, die eine Betriebsart der Lastpunktanhebung darstellt. Bei der Lastpunktanhebung stellt der Verbrennungsmotor sowohl die Leistung zur vollständigen Erfüllung des positiven Fahrerwunschmomentes wie auch zum gleichzeitigen Laden des Traktionsenergiespeichers bereit.

Die Betriebsart BA3 stellt eine Betriebsart des rein elektrischen Fahrens dar.

Es ist ein besonderer Aspekt des vorliegenden Ausführungsbeispiels, dass nun in analoger Weise zu den Schritten zur Bestimmung der optimalen Leistungsverteilung je Betriebsart vergleichbare Schritte zur Bestimmung der optimalen Betriebsart durchgeführt werden, was gut in Figur 5 erkennbar ist, da die Schritte S52 bis S55 im Prinzip den Schritten S42 bis S45 entsprechen. Die Besonderheit bei der Durchführung der Schritte S52 bis S55 liegt darin, dass die Berechnungsschritte nun mit den optimalen Leistungsverteilungen 2a der Betriebsarten und den zugehörigen Werten 5b, 6b, 7b der Bewertungsvariablen durchlaufen werden.

In Schritt S52 werden zunächst wieder die Optimalwerte 5d, 6d, 7d der Bewertungsvariablen bestimmt. Ob der jeweilige Optimalwert ein Maximalwert, ein Minimalwert oder ein Sollwert ist, hängt wiederum von dem jeweiligen Zielkriterium ab.

Für die Maximierung der Energieeffizienz der elektrischen Traktionsmaschine wird wiederum der Maximalwert gesucht. Dieses Mal aber über alle Betriebsarten hinweg, so dass jeweils der Wert 5b als Maximalwert 5d ermittelt wird, der den größten Wert im Betriebspunkt 2a des optimalen E-Moments aufweist. Vorliegend ist dies der Punkt 5b der Betriebsart BA2, da der Wert 5b der Betriebsart BA3 und der Betriebsart BA 1 kleinerlst.

Für die Batterieleistung als Bewertungsvariable wird wiederum ein Sollwert 6d vorgegeben, der als Optimalwert festgelegt wird.

Für die Bewertungsvariable Konfigurationswechsel 7 wird der Minimalwert gesucht. Als Minimalwert 7d wird der Wert 7b der Höhe null der Betriebsart 3 als Optimalwert festgelegt. Der so bestimmte Optimalwert 5d, 6d, 7d für jede Bewertungsvariable, nachfolgend als zweiter Optimalwert bezeichnet, gilt für alle Betriebsarten BA1, BA2 und BA3 und wird zur Bestimmung der gewichteten zweiten Abweichung verwendet, die jeweils für jede Bewertungsvariable in jeder Betriebsart der ersten Auswahl in Schritt S53 bestimmt wird.

Die gewichtete zweite Abweichung 5e, 6e, 7e stellt jeweils eine gewichtete Abweichung des zweiten Optimalwerts 5d, 6d, 7d der jeweiligen Bewertungsvariable vom Werte der jeweiligen Bewertungsvariable 5b, 6b etc. im Betriebspunkt 2a der bestimmten optimalen Leistungsverteilung für die jeweilige Betriebsart dar.

So ergibt sich beispielsweise für die Betriebsart BA2 ein Wert von 0 für die gewichtete zweite Abweichung 5e der Betriebsvariable "Wirkungsgrad der elektrischen Traktionsmaschine", da der zweite Optimalwert 5b mit dem Wert der Bewertungsvariable dieser Betriebsart identisch ist. Dagegen ergibt sich für die Betriebsart BA3 eine positive Betragsdifferenz der gewichteten zweiten Abweichung 5e. Umgekehrt ergibt sich beispielsweise für die gewichtete zweite Abweichung 7e der Betriebsart BA3 ein Wert von 0, während die gewichtete zweite Abweichung 7e für die Betriebsart BA2 einen positiven Betragswert ergibt etc..

Anschließend erfolgt in Schritt S54 die Bestimmung der optimalen Betriebsart unter Verwendung einer zweiten Entscheidungsregel, gemäß der die Betriebsarten BA1, BA2 und BA3 jeweils in Abhängigkeit von den gewichteten zweiten Abweichungen 5e, 6e, und 7e der Bewertungsvariablen bewertet werden und daraus eine optimale Betriebsart festgelegt wird.

Vorliegend wird als Entscheidungsregel nicht die zuvor angewandte Minimax-Entscheidungsregel verwendet. Gemäß der zweiten Entscheidungsregel werden vielmehr die gewichteten zweiten Abweichungen 5e, 6e, 7e der Bewertungsvariablen jeweils einer Betriebsart summiert, woraus sich die Punkte ∑1, ∑2 und ∑3 ergeben. Anschließend wird der kleinste dieser Summenwerte ermittelt, was vorliegend dem Wert ∑2 entspricht. Dann wird diejenige Betriebsart als optimale Betriebsart 3 festgelegt, die den kleinsten dieser Summenwerte aufweist. Somit wird vorliegend die Betriebsart BA2 als optimale Betriebsart festgelegt. Die optimale Betriebsart BA2, die einer Lastpunktabsenkung entspricht, wird somit nachfolgend von einer Steuereinrichtung als aktuelle Betriebsart eingestellt, wobei die in dieser Betriebsart zuvor bestimmte optimale Leistungsverteilung in Form des optimalen E-Maschinenmoments in der Höhe von etwas über 200 Nm als E-Maschinenmoment vorgegeben wird.

Anschließend erfolgt eine erneute Berechnung einer optimalen Betriebsart 3 in der Abfolge der Schritte S2 bis S5.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1a: Gesamtmenge möglicher Betriebsarten
- 1b: Menge der möglichen Betriebsarten für einen vorgegebenen Fahrzeugbewegungszustand
- 1c: Erste Auswahl möglicher Betriebsarten
- 2: Mögliche E-Maschinenmomente für eine Betriebsart
- 2a: Optimales E-Maschinenmoment für eine Betriebsart
- 3: Optimale Betriebsart
- 4: Fahrzeugsteuerung.
- 4a: Wirkungsgradkennfelder
- 5: Mögliche Werte der Bewertungsvariable Wirkungsgrad der elektrischen Traktionsmaschine
- 5a: Erster Optimalwert der Variable Wirkungsgrad
- 5b: Wert der Variable Wirkungsggrad im Betriebspunkt des optimalen E-Maschinenmoments
- 5c: Verlauf der gewichteten ersten Abweichung der Bewertungsvariable Wirkungsgrad
- 5d: Zweiter Optimalwert der Variable Wirkungsgrad
- 5e: Zweite gewichtete Abweichung der Bewertungsvariable Wirkungsgrad
- 6: Mögliche Werte der Bewertungsvariable Batterieleistung
- 6a: Erster Optimalwert der Variable Batterieleistung
- 6b: Wert der Variable Batterieleistung im Betriebspunkt des optimalen E-Maschinenmoments
- 6c: Verlauf der gewichteten ersten Abweichung der Bewertungsvariable Batterieleistung
- 6d: Zweiter Optimalwert der Variable Batterieleistung
- 6e: Zweite gewichtete Abweichung der Bewertungsvariable Batterieleistung
- 7: Mögliche Werte der dritten Bewertungsvariable
- 7a: Erster Optimalwert der dritten Bewertungsvariable
- 7b: Wert der dritten Bewertungsvariable im Betriebspunkt des optimalen E-Maschinenmoments
- 7c: Verlauf der gewichteten ersten Abweichung der dritten Bewertungsvariable
- 7d: Zweiter Optimalwert der dritten Variable
- 7e: Zweite gewichtete Abweichung der dritten Bewertungsvariable
- 9: Ausgeschlossene E-Momente gemäß Ausschlusskriterien
- 10: Minimax-Kurve
- 10a: Minimum der Minimax-Kurve
- 11: Fahrzeugbewegungszustände
- 12: Zuordnung von möglichen Betriebsarten zu bestimmten Fahrzeugbewegungszuständen

## Patentansprüche

1. Verfahren zur Auswahl einer Betriebsart eines Hybridfahrzeugs, bei dem aus einer vorgegebenen Menge möglicher Betriebsarten (1a) eines hybridisierten Antriebsstrangs eine für den aktuellen Betriebszeitpunkt hinsichtlich vorgegebener Zielkriterien optimale Betriebsart mit einer korrespondierenden optimalen Leistungsverteilung im Antriebsstrang ausgewählt wird, wobei wenigstens eine Bewertungsvariable für jedes der vorgegebenen Zielkriterien zur quantitativen Beschreibung des jeweiligen Zielkriteriums bestimmt wird (S1), umfassend die Schritte:
- Für jede Betriebsart einer ersten Auswahl (1c) möglicher Betriebsarten, Bestimmung von möglichen Leistungsverteilungen (2) im Antriebsstrang (S3); und
- Für jede Betriebsart der ersten Auswahl, Bestimmung von Werten (5, 6, 7) der Bewertungsvariablen für jede der bestimmten Leistungsverteilungen (2) der jeweiligen Betriebsart und Bestimmung einer optimalen Leistungsverteilung (2a) im Antriebsstrang mittels der bestimmten Werte der Bewertungsvariablen für die jeweilige Betriebsart (S4); und
- Auswahl einer optimalen Betriebsart mittels derjenigen Werte der Bewertungsvariablen, die diese für die Betriebsarten der ersten Auswahl jeweils im Betriebspunkt der bestimmten optimalen Leistungsverteilung aufweisen (S5) **dadurch gekennzeichnet,**
**dass** zur Bestimmung der optimalen Leistungsverteilung für jede Betriebsart der ersten Auswahl (S4) die folgenden Schritte für jede Betriebsart der ersten Auswahl durchgeführt werden:
a) Für jede Bewertungsvariable, Bestimmung eines ersten Optimalwerts (5a, 6a, 7a) der Bewertungsvariable in der jeweiligen Betriebsart, wobei der erste Optimalwert vorzugsweise (S42)
a1) als ein Extremwert (5a, 7a) der bestimmten Werte der Bewertungsvariable in der jeweiligen Betriebsart festgelegt wird, falls das von der Bewertungsvariable beschriebene Ziel ein Extremierungsziel ist, und
a2) als ein von den bestimmten Werten der Bewertungsvariable in der jeweiligen Betriebsart unabhängiger Sollwert (6a) vorgegeben wird, falls das von der Bewertungsvariable beschriebene Ziel ein Approximierungsziel ist;
b) Für jede Bewertungsvariable, Bestimmung von gewichteten ersten Abweichungen (5c, 6c, 7c) der Werte der jeweiligen Bewertungsvariable von dem bestimmten ersten Optimalwert (5a, 6a, 7a) der jeweiligen Bewertungsvariable (S43); und
c) Bestimmung der optimalen Leistungsverteilung der jeweiligen Betriebsart unter Verwendung einer vorbestimmten ersten Entscheidungsregel (S44), die in Abhängigkeit von den bestimmten gewichteten ersten Abweichungen (5c, 6c, 7c) der Bewertungsvariablen eine optimale Leistungsverteilung (2a) festlegt (S44); und/oder
**dass** zur Auswahl einer optimalen Betriebsart aus der ersten Auswahl möglicher Betriebsarten die folgenden Schritte durchgeführt werden:
a) Für jede Bewertungsvariable, Bestimmung eines für alle Betriebsarten der ersten Auswahl gültigen zweiten Optimalwerts (5d, 6d, 7d) der Bewertungsvariable (S52), wobei der zweite Optimalwert vorzugsweise
a1) als ein Extremwert der Werte (5b, 7b) der jeweiligen Bewertungsvariablen im Betriebspunkt der bestimmten optimalen Leistungsverteilung in allen Betriebsarten der ersten Auswahl festgelegt wird, falls das von der Bewertungsvariable beschriebene Ziel ein Extremierungsziel ist, und
a2) als ein von den bestimmten Werten (5b, 7b) der jeweiligen Bewertungsvariable unabhängiger Sollwert (6d) vorgegeben wird, falls das von der Bewertungsvariable beschriebene Ziel ein Approximierungsziel ist;
b) Bestimmung einer gewichteten zweiten Abweichung (5e, 6e, 7e), die jeweils für jede Bewertungsvariable in jeder Betriebsart der ersten Auswahl bestimmt wird und die jeweils eine gewichtete Abweichung des zweiten Optimalwerts (5d, 6d, 7d) der jeweiligen Bewertungsvariable vom Wert der Bewertungsvariablen im Betriebspunkt (2a) der bestimmten optimalen Leistungsverteilung für die jeweilige Betriebsart angibt (S53).
c) Auswahl der optimalen Betriebsart unter Verwendung einer vorbestimmten zweiten Entscheidungsregel, die die Betriebsarten der ersten Auswahl jeweils in Abhängigkeit von den gewichteten zweiten Abweichungen (5e, 6e, 7e) der Bewertungsvariablen bewertet und eine optimale Betriebsart (BA2) festlegt (S54).

2. Verfahren nach 1, **gekennzeichnet durch** wenigstens einen Gewichtungsfaktor für jede Bewertungsvariable zur Bestimmung der gewichteten
a) ersten Abweichungen (5c, 6c, 7c), der die betragsmäßige Differenz der Werte der Bewertungsvariablen von dem ersten Optimalwert der jeweiligen Bewertungsvariable auf eine dimensionslose Basis oder eine für alle Bewertungsvariablen gemeinsame Kostenbasis skaliert; und/oder
b) zweiten Abweichungen (5e, 6e, 7e, 8e), der die betragsmäßige Differenz der Werte der Bewertungsvariablen von dem zweiten Optimalwert der jeweiligen Bewertungsvariable auf eine dimensionslose Basis oder eine für alle Bewertungsvariablen gemeinsame Kostenbasis skaliert.

3. Verfahren nach Anspruch 1 oder 2, **dadurch gekennzeichnet,**
a) dass gemäß der zweiten Entscheidungsregel die gewichteten zweiten Abweichungen (5e, 6e, 7e, 8e) der Bewertungsvariablen jeweils einer Betriebsart summiert werden und diejenige Betriebsart als optimale Betriebsart festgelegt wird, deren Summenwert (S2) der summierten zweiten Abweichungen (∑1, ∑2, ∑3) minimal ist; und/oder
b1) dass die erste Entscheidungsregel eine Minimax-Entscheidungsregel ist, und/oder
b2) dass gemäß der ersten Entscheidungsregel an jedem Betriebspunkt der möglichen Leistungsverteilungen einer Betriebsart jeweils aus den Werten der gewichteten ersten Abweichungen (5c, 6c, 7c) der Bewertungsvariablen die größte erste Abweichung (10) ermittelt wird und derjenige Betriebspunkt (2a) als optimale Leistungsverteilung festgelegt wird, der die kleinste (10a) der ermittelten größten ersten Abweichungen (10) aufweist.

4. Verfahren nach einem der vorhergehenden Ansprüche, **dadurch gekennzeichnet, dass** eine Bestimmung der ersten Auswahl der Betriebsarten folgende Schritte umfasst:
a) Vorgabe von möglichen Fahrzeugbewegungszuständen (11) des Hybridfahrzeugs, von möglichen Betriebsarten des Antriebsstrangs und von einer Zuordnung (12), die angibt, welche der möglichen Betriebsarten in welchem Fahrzeugbewegungszustand zulässig sind;
b) Bestimmung eines aktuellen Fahrzeugbewegungszustands; und
c) Einschränkung der Betriebsarten des Fahrzeugs auf diejenigen, die dem bestimmten aktuellen Fahrzeugbewegungszustand zugeordnet sind (S21).

5. Verfahren nach Anspruch 4, **dadurch gekennzeichnet, dass** die Bestimmung der ersten Auswahl der Betriebsarten folgende Schritte umfasst:
a) Vorgabe von wenigstens einer Restriktionsregel, die in Abhängigkeit von wenigstens einem Betriebsparameter und unabhängig von einer aktuellen Momentenanforderung und dem aktuellem Fahrzeugbewegungszustand festlegt, welche Betriebsarten aktuell zur Verfügung stehen; und
b) Einschränkung der Betriebsarten des Fahrzeugs auf diejenigen, die gemäß der wenigstens einen Restriktionsregel aktuell zur Verfügung stehen (S22).

6. Verfahren nach Anspruch 5, **dadurch gekennzeichnet, dass** gemäß der wenigstens einen Restriktionsregel eine Verfügbarkeit von Komponenten im Antriebstrang geprüft wird, insbesondere eines elektrischen Energiespeichers und/oder einer elektrischen Traktionsmaschine.

7. Verfahren nach einem der vorhergehenden Ansprüche, **dadurch gekennzeichnet,**
a) **dass** anhand vordefinierter Ausschlusskriterien Werte (9) der Leistungsverteilung der Betriebsarten bestimmt werden, die als mögliche Betriebspunkte ausgeschlossen werden sollen, und
b) **dass** zur Bestimmung der optimalen Leistungsverteilung für jede Betriebsart der ersten Auswahl nur diejenigen Werte der möglichen Leistungsverteilung und die jeweils zugeordneten Werte der Bewertungsvariablen verwendet werden, die nicht mittels der Ausschlusskriterien ausgeschlossen wurden (S45).

8. Verfahren nach einem der vorhergehenden Ansprüche, **dadurch gekennzeichnet,**
a) **dass** das Fahrzeug ein Parallel-Hybridfahrzeug ist; und
b) **dass** die für jede Betriebsart möglichen Leistungsverteilungen im Antriebsstrang als die von der elektrischen Traktionsmaschine erzeugbaren Momente unter Berücksichtigung der Leistungsfähigkeiten der Komponenten im Antriebsstrang ermittelt werden; und
c) **dass** die optimale Leistungsverteilung durch ein hinsichtlich der vorgegebenen Zielkriterien optimales Moment (2a) der elektrischen Traktionsmaschine bestimmt ist.

9. Verfahren nach einem der vorhergehenden Ansprüche, **dadurch gekennzeichnet, dass** die möglichen Betriebsarten des Antriebsstrang zumindest einige der folgenden Betriebsarten umfassen: rein verbrennungsmotorisches Fahren, rein elektrisches Fahren bei ausgeschaltetem Verbrennungsmotor, elektrischen Fahren mit Verbrennungsmotor im Leerlaufbetrieb, Boost-Betrieb, Bremsrekuperation, elektrisches Anfahren, Lastpunktanhebung, Lastpunktabsenkung und sogenannter GenSet-Betrieb.

10. Hybridfahrzeug, insbesondere Nutzfahrzeug, aufweisend eine Steuereinrichtung zur Auswahl einer Betriebsart des Hybridfahrzeugs, die eingerichtet ist, das Verfahren gemäß einem der Ansprüche 1 bis 9 durchzuführen.

## Claims

1. Method for selecting a mode of operation of a hybrid vehicle, in which a mode of operation, ideal for the current instant of operation in respect of predetermined target criteria, with a corresponding ideal power distribution in the drivetrain is selected from a predetermined set of possible modes of operation (1a) of a hybridized drivetrain, wherein at least one evaluation variable is determined (S1) for each of the predetermined target criteria for the quantitative description of the respective target criterion, comprising the following steps:
- determining possible power distributions (2) in the drivetrain (S3) for each mode of operation of a first selection (1c) of possible modes of operation; and
- determining values (5, 6, 7) of the evaluation variables for each one of the determined power distributions (2) of the respective mode of operation for each mode of operation of the first selection and determining an ideal power distribution (2a) in the drivetrain by means of the determined values of the evaluation variables for the respective mode of operation (S4); and
- selecting an ideal mode of operation by means of those values of the evaluation variables which the latter have for the modes of operation of the first selection, in each case at the operating point of the determined ideal power distribution (S5) **characterized in that** the following steps are carried out for each mode of operation of the first selection for the purposes of determining the ideal power distribution for each mode of operation of the first selection (S4):
a) determining a first ideal value (5a, 6a, 7a) of the evaluation variable for each evaluation variable in the respective mode of operation, wherein the first ideal value is preferably (S42)
a1) set as an extremal value (5a, 7a) of the determined values of the evaluation variable in the respective mode of operation if the target described by the evaluation variable is an extremization target, and
a2) predetermined as a setpoint value (6a) which is independent of the determined values of the evaluation variable in the respective mode of operation if the target described by the evaluation variable is an approximation target;
b) determining weighted first deviations (5c, 6c, 7c) of the values of the respective evaluation variable for each evaluation variable from the determined first ideal value (5a, 6a, 7a) of the respective evaluation variable (S43); and
c) determining the ideal power distribution of the respective mode of operation using a predetermined first decision rule (S44), which sets (S44) an ideal power distribution (2a) depending on the determined weighted first deviations (5c, 6c, 7c) of the evaluation variables; and/or **in that** the following steps are carried out for selecting an ideal mode of operation from the first selection of possible modes of operation:
a) determining a second ideal value (5d, 6d, 7d), valid for all modes of operation of the first selection, of the evaluation variable (S52) for each evaluation variable, wherein the second ideal value is preferably
a1) set as an extremal value of the values (5b, 7b) of the respective evaluation variables at the operating point of the determined ideal power distribution in all modes of operation of the first selection if the target described by the evaluation variable is an extremization target, and
a2) predetermined as a setpoint value (6d) which is independent of the determined values (5b, 7b) of the respective evaluation variable if the target described by the evaluation variable is an approximation target;
b) determining a weighted second deviation (5e, 6e, 7e), which is respectively determined for each evaluation variable in each mode of operation of the first selection and which respectively specifies (S53) a weighted deviation of the second ideal value (5b, 6d, 7d) of the respective evaluation variable from the value of the evaluation variables at the operating point (2a) of the determined ideal power distribution for the respective mode of operation,
c) selecting the ideal mode of operation using a predetermined second decision rule which evaluates the modes of operation of the first selection, in each case in a manner dependent on the weighted second deviations (5e, 6e, 7e) of the evaluation variables, and sets (S54) an ideal mode of operation (BA2).

2. Method according to Claim 1, **characterized by** at least one weighting factor for each evaluation variable for determining the weighted
a) first deviations (5c, 6c, 7c), which weighting factor scales the difference in terms of magnitude of the values of the evaluation variables from the first ideal value of the respective evaluation variable to a dimensionless basis or to a cost basis common to all evaluation variables; and/or
b) second deviations (5e, 6e, 7e, 8e), which weighting factor scales the difference in terms of magnitude of the values of the evaluation variables from the second ideal value of the respective evaluation variable to a dimensionless basis or to a cost basis common to all evaluation variables.

3. Method according to Claim 1 or 2, **characterized**
a) in that, in accordance with the second decision rule, the weighted second deviations (5e, 6e, 7e, 8e) of the evaluation variables of in each case one mode of operation are summed and the mode of operation whose summed value (S2) of the summed second deviations (□1, □2, □3) is minimal is set as an ideal mode of operation; and/or
b1) in that the first decision rule is a minimax decision rule and/or
b2) in that, in accordance with the first decision rule, the largest first deviation (10) is established at each operating point of the possible power distributions of one mode of operation, in each case from the values of the weighted first deviations (5c, 6c, 7c) of the evaluation variables, and the operating point (2a) which has the smallest (10a) one of the established largest first deviations (10) is set as ideal power distribution.

4. Method according to one of the preceding claims, **characterized in that** determining the first selection of the modes of operation comprises the following steps:
a) predetermining possible vehicle movement states (11) of the hybrid vehicle, possible modes of operation of the drivetrain and an assignment (12) specifying which ones of the possible modes of operation are admissible in which vehicle movement state;
b) determining a current vehicle movement state; and
c) restricting the modes of operation of the vehicle to those that are assigned to the determined current vehicle movement state (S21).

5. Method according to Claim 4, **characterized in that** determining the first selection of the modes of operation comprises the following steps:
a) predetermining at least one restriction rule which sets which modes of operation are currently available depending on at least one operating parameter and independently of a current torque requirement and the current vehicle movement state; and
b) restricting the modes of operation of the vehicle to those which are currently available in accordance with the at least one restriction rule (S22) .

6. Method according to Claim 5, **characterized in that**, in accordance with the at least one restriction rule, an availability of components in the drivetrain is checked, in particular of an electric energy store and/or an electric traction machine.

7. Method according to one of the preceding claims, **characterized**
a) **in that** values (9) of the power distribution of the modes of operation which should be excluded as possible operating points are determined on the basis of predetermined exclusion criteria, and
b) **in that**, for the purposes of determining the ideal power distribution for each mode of operation of the first selection, only those values of the possible power distribution and the respectively assigned values of the evaluation variables which were not excluded by means of the exclusion criteria are used (S45).

8. Method according to one of the preceding claims, **characterized**
a) **in that** the vehicle is a parallel hybrid vehicle; and
b) **in that** the power distributions in the drivetrain which are possible for each mode of operation are established as the torques generable by the electric traction machine, taking into account the capabilities of the components in the drivetrain; and
c) **in that** the ideal power distribution is determined by a torque (2a) of the electric traction machine which is ideal in respect of the predetermined target criteria.

9. Method according to one of the preceding claims, **characterized in that** the possible modes of operation of the drivetrain comprise at least some of the following modes of operation: pure combustion-engine-related travel, pure electric travel with the combustion engine switched off, electric travel with the combustion engine operating at idle speed, boost operation, brake recuperation, electric start, load-point increase, load-point reduction and the so-called genset operation.

10. Hybrid vehicle, in particular commercial vehicle, comprising a control apparatus for selecting a mode of operation of the hybrid vehicle configured to carry out the method according to one of Claims 1 to 9.

## Revendications

1. Procédé de sélection d'un mode de fonctionnement d'un véhicule hybride, selon lequel un mode de fonctionnement optimal pour l'instant de fonctionnement actuel du point de vue de critères cibles prédéfinis, avec une distribution de puissance optimale correspondante dans le groupe motopropulseur, est sélectionné parmi un nombre prédéfini de modes de fonctionnement possibles (1a) d'un groupe motopropulseur hybride, au moins une variable d'évaluation étant déterminée pour chacun des critères cibles prédéfinis en vue de la description quantitative du critère cible respectif (S1), comprenant les étapes suivantes :
- pour chaque mode de fonctionnement d'une première sélection (1c) de modes de fonctionnement possibles, détermination des distributions de puissance possibles (2) dans le groupe motopropulseur (S3) ; et
- pour chaque mode de fonctionnement de la première sélection, détermination de valeurs (5, 6, 7) des variables d'évaluation pour chacune des distributions de puissance (2) déterminées du mode de fonctionnement respectif et détermination d'une distribution de puissance optimale (2a) dans le groupe motopropulseur au moyen des valeurs déterminées des variables d'évaluation pour chaque mode de fonctionnement (S4) ; et
- sélection d'un mode de fonctionnement optimal au moyen des valeurs des variables d'évaluation qui présentent celles-ci pour les modes de fonctionnement de la première sélection respectivement au point de fonctionnement de la distribution de puissance optimale (S5),
**caractérisé en ce**
**que** les étapes suivantes sont exécutées pour chaque mode de fonctionnement de la première sélection en vue de déterminer la distribution de puissance optimale pour chaque mode de fonctionnement de la première sélection (S4) :
a) pour chaque variable d'évaluation, détermination d'une première valeur optimale (5a, 6a, 7a) de la variable d'évaluation dans le mode de fonctionnement respectif la première valeur optimale étant de préférence (S42)
a1) définie en tant que valeur extrême (5a, 7a) des valeurs déterminées de la variable d'évaluation dans le mode de fonctionnement respectif dans le cas où la cible décrite par la variable d'évaluation est une cible d'extrême, et
a2) prédéfinie en tant que valeur de consigne (6a) indépendante des valeurs déterminées de la variable d'évaluation dans le mode de fonctionnement respectif dans le cas où la cible décrite par la variable d'évaluation est une cible approximative ;
b) pour chaque variable d'évaluation, détermination de premiers écarts pondérés (5c, 6c, 7c) des valeurs de la variable d'évaluation respective par rapport à la première valeur optimale (5a, 6a, 7a) déterminée de la variable d'évaluation respective (S43) ; et
c) détermination de la distribution de puissance optimale du mode de fonctionnement respectif en utilisant une première règle de décision prédéterminée (S44), laquelle définit une distribution de puissance optimale (2a) en fonction des premiers écarts pondérés (5c, 6c, 7c) déterminés des variables d'évaluation (S44) ; et/ou que les étapes suivantes sont exécutées pour sélectionner un mode de fonctionnement optimal à partir de la première sélection des modes de fonctionnement possibles :
a) pour chaque variable d'évaluation, détermination d'une deuxième valeur optimale (5d, 6d, 7d) de la variable d'évaluation valide pour tous les modes de fonctionnement de la première sélection, (S52), la deuxième valeur optimale étant de préférence
a1) définie en tant que valeur extrême des valeurs (5b, 7b) des variables d'évaluation respectives au point de fonctionnement de la distribution de puissance optimale déterminée dans tous les modes de fonctionnement de la première sélection dans le cas où la cible décrite par la variable d'évaluation est une cible d'extrême, et
a2) prédéfinie en tant que valeur de consigne (6d) indépendante des valeurs déterminées (5b, 7b) de la variable d'évaluation respective dans le cas où la cible décrite par la variable d'évaluation est une cible approximative ;
b) détermination d'un deuxième écart pondéré (5e, 6e, 7e), qui est déterminé respectivement pour chaque variable d'évaluation dans chaque mode de fonctionnement de la première sélection et qui indique respectivement un écart pondéré entre la deuxième valeur optimale (5d, 6d, 7d) de la variable d'évaluation respective et la valeur des variables d'évaluation au point de fonctionnement (2a) de la distribution de puissance optimale déterminée pour le mode de fonctionnement respectif (S53) ; et
c) sélection du mode de fonctionnement optimal en utilisant une deuxième règle de décision prédéterminée, laquelle évalue les modes de fonctionnement de la première sélection respectivement en fonction des deuxièmes écarts pondérés (5e, 6e, 7e) des variables d'évaluation et définit un mode de fonctionnement optimal (BA2) (S54).

2. Procédé selon la revendication 1, **caractérisé par** au moins un facteur de pondération pour chaque variable d'évaluation en vue de déterminer les
a) premiers écarts pondérés (5c, 6c, 7c), lequel redimensionne l'amplitude de la différence entre les valeurs des variables d'évaluation et la première valeur optimale de la variable d'évaluation respective sur une base sans dimension ou une base de coût commune à toutes les variables d'évaluation ; et/ou
b) deuxièmes écarts pondérés (5e, 6e, 7e, 8e), lequel redimensionne l'amplitude de la différence entre les valeurs des variables d'évaluation et la deuxième valeur optimale de la variable d'évaluation respective sur une base sans dimension ou une base de coût commune à toutes les variables d'évaluation.

3. Procédé selon la revendication 1 ou 2, caractérisé en ce
a) que conformément à la deuxième règle de décision, les deuxièmes écarts pondérés (5e, 6e, 7e, 8e) des variables d'évaluation d'un mode de fonctionnement respectif sont additionnés et le mode de fonctionnement qui est défini en tant que mode de fonctionnement optimal est celui dont le total (S2) des deuxièmes écarts additionnés (∑1, ∑2, ∑3) est minimal ; et/ou
b1) que la première règle de décision est une règle de décision mini/maxi, et/ou
b2) que conformément à la première règle de décision, le plus grand premier écart (10) est déterminé à chaque point de fonctionnement des distributions de puissance possibles d'un mode de fonctionnement, respectivement à partir des valeurs des premiers écarts pondérés (5c, 6c, 7c) des variables d'évaluation et le point de fonctionnement (2a) qui est défini en tant que distribution de puissance optimale est celui qui présente le plus petit (10a) des plus grands premiers écarts (10) déterminés.

4. Procédé selon l'une des revendications précédentes, **caractérisé en ce qu'**une détermination de la première sélection des modes de fonctionnement comprend les étapes suivantes :
a) prédéfinition des états de déplacement de véhicule possibles (11) du véhicule hybride, de modes de fonctionnement possibles du groupe motopropulseur et d'une association (12) qui indique lesquels des modes de fonctionnement possibles sont autorisés dans quel état de déplacement de véhicule ;
b) détermination d'un état de déplacement de véhicule actuel ; et
c) limitation des modes de fonctionnement du véhicule à ceux qui sont associés à l'état de déplacement de véhicule actuel détermin (S21).

5. Procédé selon la revendication 4, **caractérisé en ce que** la détermination de la première sélection des modes de fonctionnement comprend les étapes suivantes :
a) indication d'au moins une règle de restriction qui définit les modes de fonctionnement qui sont actuellement disponibles en fonction d'au moins un paramètre de fonctionnement et indépendamment d'une demande de couple actuelle et de l'état de déplacement de véhicule actuel ; et
b) limitation des modes de fonctionnement du véhicule à ceux qui, conformément à l'au moins une règle de restriction, sont actuellement disponibles (S22).

6. Procédé selon la revendication 5, **caractérisé en ce qu'**une disponibilité des composants dans le groupe motopropulseur, notamment d'un accumulateur d'énergie électrique et/ou d'une machine de traction électrique est vérifiée conformément à l'au moins une règle de restriction.

7. Procédé selon l'une des revendications précédentes, **caractérisé en ce**
a) **que** des valeurs (9) de la distribution de puissance des modes de fonctionnement qui doivent être exclues en tant que points de fonctionnement possibles sont déterminées à l'aide de critères d'exclusion prédéfinis, et
b) **qu'**en vue de la détermination de la distribution de puissance optimale pour chaque mode de fonctionnement de la première sélection, seules sont utilisées les valeurs de la distribution de puissance possible et les valeurs respectivement associées des variables d'évaluation qui n'ont pas été exclues au moyen des critères d'exclusion (S45) .

8. Procédé selon l'une des revendications précédentes, **caractérisé en ce**
a) **que** le véhicule est un véhicule hybride parallèle ; et
b) **que** les distributions de puissance possibles dans le groupe motopropulseur pour chaque mode de fonctionnement sont déterminées en tant que couples pouvant être produits par la machine de traction électrique en tenant compte des performances des composants dans le groupe motopropulseur ; et
c) **que** la distribution de puissance optimale est déterminée par un couple (2a) de la machine de traction électrique qui est optimal du point de vue des critères cibles prédéfinis.

9. Procédé selon l'une des revendications précédentes, **caractérisé en ce que** les modes de fonctionnement possibles du groupe motopropulseur comprennent au moins certains des modes de fonctionnement suivants : déplacement purement par moteur à combustion, déplacement purement électrique avec moteur à combustion interne arrêté, déplacement électrique avec moteur à combustion interne au ralenti, mode suralimentation, récupération de freinage, démarrage électrique, élévation du point de charge, abaissement du point de charge et mode dit en groupe électrogène.

10. Véhicule hybride, notamment véhicule utilitaire, comprenant un dispositif de commande destiné à sélectionner un mode de fonctionnement du véhicule hybride, lequel est conçu pour mettre en oeuvre le procédé selon l'une des revendications 1 à 9.
